# EUROPEAN PATENT APPLICATION

(11) **EP 4 811 114 A1**
(43) Date of publication of application: **23.09.2026**
(21) Application number: 26165841.3
(22) Date of filing: 18.03.2026
(51) Int. Cl.: G06F 8/36

(54) **API REQUEST GENERATOR**

(30) Priority: 21.03.2025 US 202563775486 P
(71) Applicant: United Parcel Service Of America, Inc., Atlanta, GA 30328 (US)
(72) Inventor: PALACIOS, Alexander, Atlanta, GA (US); GHATE, Shreya Satyajit, Alpharetta, GA (US); BHATNAGAR, Rahul Vijay, Alpharetta, GA (US); NATOLI, Tyler James, Cumming, GA (US); CREECH, Christopher, Canton, GA (US)
(74) Representative: Zacco Sweden AB

(57) **Abstract**

In general, various embodiments of the present disclosure provide systems, methods, apparatuses, and technologies, and/or the like for generating API requests for specific use cases. Specifically, various embodiments provide a novel API request generator that enables software developers to craft tailored API requests aligned with specific use cases. In various embodiments, the API request generator allows a developer to describe a specific use case for an API in natural language and the API request generator utilizes a specification for the API in generating a custom API request body for the specific use case that requires little to no modifications. Accordingly, embodiments of the API request generator can reduce errors in generating an API request, reduce the time it takes to make a first API call using the API request, and streamline the development workflow for generating a software application utilizing the API request.

## Description

### CROSS REFERENCE TO RELATED APPLICATIONS

This application claims priority from U.S. Provisional Patent Application Ser. No. 63/775,486, filed March 21, 2025, the disclosure of which is hereby incorporated herein by reference in its entirety.

### BACKGROUND

Application Programming Interfaces ("APIs") are often used in today's computing world by developers as an interface within software applications to access data or functionalities from other software applications without needing to know the intricate details of the other software applications' internal workings. In general, an API includes a set of parameters, a set of rules, and/or protocols that allows a first software application to communicate and exchange data with a second software application, essentially acting as a bridge between the two applications to enable them to interact and share information seamlessly. For example, many applications ("apps") found on mobile devices will use APIs to access data remotely over a network (e.g., cellular network and/or the Internet) from an application running on another computing device.

A software application will submit an API request to an API to ask for specific data from a second software application or to have the second software application perform a certain action. The API request typically includes an endpoint (a specific digital location such as, for example, a URL) where the API receives a request, a method (such as, for example, GET, POST, PUT, DELETE) specifying the desired action, and parameters providing additional information to influence the response to the request.

A software developer will often make use of an API's specification in incorporating (e.g., embedding) an API request within a software application. The API specification is a document that describes how the API functions and how it may interact with other APIs. For example, the API specification may define the API's structure, including its endpoints, schemas, parameters, responses, and/or the like. Additionally, or alternatively, the API specification may describe how the API will function and what results to expect, may specify the data types and models that the API will use, may explain how the API will connect with other APIs, may set standards for the API's design and operation, and/or the like. The software developer will use the API specification in generating an API request that is specific to the use case for which the software developer is calling the API within the software application to handle.

However, the complexity of using the API specification in generating an API request for a specific use case can prove to be quite a technical challenge for many software developers. This is because the API specification can often be a very convoluted document that is difficult for the software developer to follow in generating an API request for his or her specific use case. For example, the software developer may have a difficult time identifying and/or deciphering from the API specification which parameters the developer should define and/or what values to define for the parameters needed for his or her use case. As a result, software developers are often confronted with the difficult task of generating API requests that is both time consuming and riddled with errors. Accordingly, a need exists in the art for processes and systems that can assist software developers in generating API requests for various use cases.

### SUMMARY

This summary is intended to introduce a selection of concepts in a simplified form that is further described below in the detailed description section of this disclosure. This summary is not intended to identify key or essential features of the claimed subject matter, nor is it intended to be used as an aid in isolation to determine the scope of the claimed subject matter.

In general, various embodiments of the present disclosure provide methods, apparatuses, systems, computing devices, computing entities, and/or the like for generating an API request for a specific use case. Various aspects of the disclosure provide a method that comprises: receiving, by computing hardware, a use case and an identifier for an application programming interface ("API"); accessing, by the computing hardware and based at least in part on the identifier, data from a specification for the API, wherein the data comprises a set of parameters and a set of parameter dependencies; generating, by the computing hardware and based at least in part on the data, a graphical data structure comprising a set of vertices and a set of edges, wherein: each vertex of the set of vertices represents a parameter from the set of parameters, and each edge of the set of edges connects a first vertex and a second vertex from the set of vertices representing a parent parameter and a child parameter from the set of parameters in a direction representing a parent-child relationship between the parent parameter and the child parameter and defines a rule based at least in part on a parameter dependency from the set of parameter dependencies that exists between the parent parameter and the child parameter; performing, by the computing hardware, a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship; generating, by the computing hardware and based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing, by the computing hardware, the subset of parameters, the rule associated with each edge of the set of edges connected to the second vertex representing the child parameter from the subset of parameters, and the use case using a large language model to generate a response, wherein the response comprises a set of values for the subset of parameters; and parsing, by the computing hardware, the response to retrieve the set of values; and generating, by the computing hardware and based at least in part on the set of values for each execution level in the hierarchy of execution levels, an API request for the use case to submit to the API, wherein the API request comprises each parameter for the set of parameters initialized with a value from the set of values generated for the hierarchy of execution levels.

In some embodiments, the set of parameters comprises a set of container parameters and a set of container-related parameters, and the method further comprises: generating, by the computing hardware and based at least in part on the set of container parameters and the set of container-related parameters, a container-representative graphical data structure comprising a set of container-representative vertices and a set of container-representative edges, wherein: each container-representative vertex of the set of container-representative vertices represents at least one of a container parameter from the set of container parameters or a container-related parameter from the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters in a direction representing a parent-child container-representative relationship between the parent container-representative parameter and the child container-representative parameter and defines a container-representative rule based at least in part on a container-representative parameter dependency from the set of parameter dependencies that exists between the parent container-representative parameter and the child container-representative parameter; performing, by the computing hardware, a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship; generating, by the computing hardware and based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing, by the computing hardware, the subset of container-representative parameters, the rule associated with each container-representative edge of the set of container-representative edges connected to the second container-representative vertex representing the child container-representative parameter from the subset of container-representative parameters, and the use case using the large language model to generate a container-representative response, wherein the container-representative response comprises a set of container-representative values for the subset of container-representative parameters; and parsing, by the computing hardware, the container-representative response to retrieve the set of container-representative values; identifying, by the computing hardware and based at least in part on at least one ancestor/descendant dependency existing for a container parameter found in the set of container parameters, a required descendent parameter from at least one of the set of container parameters or the set of container-related parameters; and merging, by the computing hardware and based at least in part on the required descendent parameter, the set of container-representative values for each container-representative execution level in the hierarchy of container-representative execution levels into the set of values for each execution level in the hierarchy of execution levels to form the assembly of values.

In some embodiments, the graphical data structure represents a directed acyclic graph. In some embodiments, the graphical data structure comprises a key-value pair data structure that comprises a first set of first key-value pairs and a second set of second key-value pairs, each first key-value pair of the first set of first key-value pairs comprises a jsonPath as a first key and a parameter object as a first value, and each second key-value pair of the second set of second key-value pairs comprises a parent jsonPath as a second key and a list of edge objects as a second value.

In some embodiments, at least one value for the set of values for at least one parameter of the subset of parameters for at least one execution level of the hierarchy of execution levels comprises an assumption and the method further comprises causing, by the computing hardware, display of the API request along with identifying the assumption. In some embodiments, the assumption comprises a default value provided in the specification for the API for the at least one parameter. In some embodiments, the method further comprises receiving, by the computing hardware, a clarification value for the at least one value that comprises the assumption; and responsive to receiving the clarification value and for each execution level in the hierarchy of execution levels: processing, by the computing hardware, the subset of parameters, the rule associated with each edge of the set of edges connected to the second vertex representing the child parameter from the subset of parameters, and the use case using the large language model to generate an updated response, wherein the updated response comprises a set of updated values for the subset of parameters based at least in part on the clarification value; and parsing, by the computing hardware, the updated response to retrieve the set of updated values; and generating, by the computing hardware and based at least in part on the set of updated values for each execution level in the hierarchy of execution levels, the API request for the use case to submit to the API.

In some embodiments, processing the subset of parameters, the rule associated with each edge of the set of edges connected to the second vertex representing the child parameter from the subset of parameters, and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters, the rule associated with each edge of the set of edges connected to the second vertex representing the child parameter from the group of parameters, and the use case; and processing the input for each execution sublevel in the set of execution sublevels using the large language model to generate the response. In some embodiments, the input for each execution sublevel in the set of execution sublevels comprises system instructions directing a behavior of the large language model, a prompt comprising the group of parameters, the rule associated with each edge of the set of edges connected to the second vertex representing the child parameter from the group of parameters, and the use case, and at least one of hyperparameters or a generation configuration for the large language model. In some embodiments, the method further comprises processing, via a prompt template, each parameter in the subset of parameters to generate the estimated prompt size.

Various aspects of the disclosure provide a system comprising a computer-readable medium storing instructions and a processing device communicatively coupled to the computer-readable medium. The processing device is configured to execute the instructions and thereby perform operations comprising: receiving a use case and an identifier for an application programming interface ("API"); accessing, based at least in part on the identifier, data from a specification for the API, wherein the data comprises a set of parameters and a set of parameter dependencies; generating, based at least in part on the data, a graphical data structure comprising a set of vertices and a set of edges, wherein: the set of vertices represents the set of parameters, and each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter; performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship; generating, based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing the subset of parameters, based at least in part on parameter dependencies from the set of parameter dependencies corresponding to the subset of parameters, and the use case using a large language model to generate a response, wherein the response comprises a set of values for the subset of parameters; and parsing the response to retrieve the set of values; and generating an API request for the use case to submit to the API, wherein the API request comprises each parameter for the set of parameters initialized with a value from the set of values generated for the hierarchy of execution levels.

In some embodiments, the set of parameters comprises a set of container parameters and a set of container-related parameters, and the operations further comprise: generating, based at least in part on the set of container parameters and the set of container-related parameters, a container-representative graphical data structure comprising a set of container-representative vertices and a set of container-representative edges, wherein: the set of container-representative vertices represents the set of container parameters and the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter; performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship; generating, based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing the subset of container-representative parameters, based at least in part on container-representative dependencies from the set of parameter dependencies corresponding to the subset of container-representative parameters, and the use case using the large language model to generate a container-representative response, wherein the container-representative response comprises a set of container-representative values for the subset of container-representative parameters; and parsing the container-representative response to retrieve the set of container-representative values; identifying, based at least in part on at least one ancestor/descendant dependency existing for a container parameter found in the set of container parameters, a required descendent parameter from at least one of the set of container parameters or the set of container-related parameters; and merging, based at least in part on the required descendent parameter, the set of container-representative values for each container-representative execution level in the hierarchy of container-representative execution levels into the set of values for each execution level in the hierarchy of execution levels to form the assembly of values.

In some embodiments, the graphical data structure comprises a key-value pair data structure that comprises a first set of first key-value pairs and a second set of second key-value pairs, each first key-value pair of the first set of first key-value pairs comprises a jsonPath as a first key and a parameter object as a first value, and each second key-value pair of the second set of second key-value pairs comprises a parent jsonPath as a second key and a list of edge objects as a second value. In some embodiments, at least one value for the set of values for at least one parameter of the subset of parameters for at least one execution level of the hierarchy of execution levels comprises an assumption and the operations further comprise causing display of the API request along with identifying the assumption. In some embodiments, the operations further comprise: receiving a clarification value for the at least one value that comprises the assumption; and responsive to receiving the clarification value and for each execution level of the hierarchy of execution levels: processing the subset of parameters, based at least in part on parameter dependencies from the set of parameter dependencies corresponding to the subset of parameters, and the use case using the large language model to generate an updated response, wherein the updated response comprises a set of updated values for the subset of parameters based at least in part on the clarification value; and parsing the updated response to retrieve the set of updated values; and generating, based at least in part on the set of updated values for each execution level in the hierarchy of execution levels, the API request for the use case to submit to the API.

In some embodiments, processing the subset of parameters, based at least in part on parameter dependencies from the set of parameter dependencies corresponding to the subset of parameters, and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters, based at least in part on parameter dependencies from the set of parameter dependencies corresponding to the group of parameters, and the use case; and processing the input for each execution sublevel in the set of execution sublevels using the large language model to generate the response.

Various aspects of the disclosure provide a computer-readable medium storing computer-executable instructions that, when executed by computing hardware, configure the computing hardware to perform operations comprising: receiving a use case for an application programming interface ("API"); accessing data from a specification for the API, wherein the data comprises a set of parameters and a set of parameter dependencies; generating, based at least in part on the data, a graphical data structure comprising a set of vertices and a set of edges, wherein: the set of vertices represents the set of parameters, and each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter; performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering; generating, based at least in part on a path between a starting vertex of the set of vertices and an ending vertex of the set of vertices as shown in the topological sort, a hierarchy of execution levels, wherein each execution level of the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing the subset of parameters and the use case using a large language model to generate a response, wherein the response comprises a set of values for the subset of parameters; and parsing the response to retrieve the set of values; and generating an API request for the use case to submit to the API, wherein the API request comprises each parameter for the set of parameters initialized with a value from the set of values generated for the hierarchy of execution levels.

In some embodiments, the set of parameters comprises a set of container parameters and a set of container-related parameters, each container parameter found in the set of container parameters comprises a set of key/value pairs, and the operations further comprise: generating, based at least in part on the set of container parameters and the set of container-related parameters, a container-representative graphical data structure comprising a set of container-representative vertices and a set of container-representative edges, wherein: the set of container-representative vertices represents the set of container parameters and the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter; generating a tree data structure that models the set of key/value pairs for each container parameter found in the set of container parameters to identify ancestor/descendant dependencies between key/value pairs found in the set of key/value pairs; performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering; generating, based at least in part on a container-representative path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing the subset of container-representative parameters and the use case using the large language model to generate a container-representative response, wherein the container-representative response comprises a set of container-representative values for the subset of container-representative parameters; and parsing the container-representative response to retrieve the set of container-representative values; identifying, based at least in part on at least one ancestor/descendant dependency existing for a container parameter found in the set of container parameters, a required descendent parameter from at least one of the set of container parameters or the set of container-related parameters; and merging, based at least in part on the required descendent parameter, the set of container-representative values for each container-representative execution level in the hierarchy of container-representative execution levels into the set of values for each execution level in the hierarchy of execution levels to form the assembly of values.

In some embodiments, the graphical data structure comprises a key-value pair data structure that comprises a first set of first key-value pairs and a second set of second key-value pairs, each first key-value pair of the first set of first key-value pairs comprises a jsonPath as a first key and a parameter object as a first value, and each second key-value pair of the second set of second key-value pairs comprises a parent jsonPath as a second key and a list of edge objects as a second value. In some embodiments, at least one value for the set of values for at least one parameter of the subset of parameters for at least one execution level of the hierarchy of execution levels comprises an assumption and the operations further comprise causing display of the API request along with identifying the assumption. In some embodiments, the operations further comprise: receiving a clarification value for the at least one value that comprises the assumption; and responsive to receiving the clarification value and for each execution level in the hierarchy of execution levels: processing the subset of parameters and the use case using the large language model to generate an updated response, wherein the updated response comprises a set of updated values for the subset of parameters based at least in part on the clarification value; parsing the updated response to retrieve the set of updated values; and generating, based at least in part on the set of updated values for each execution level in the hierarchy of execution levels, the API request for the use case to submit to the API.

In some embodiments, processing the subset of parameters and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters and the use case; and processing the input for each execution sublevel in the set of execution sublevels using the large language model to generate the response. In some embodiments, the input for each execution sublevel in the set of execution sublevels comprises system instructions directing a behavior of the large language model, a prompt comprising the group of parameters and the use case, and at least one of hyperparameters or a generation configuration for the large language model.

### BRIEF DESCRIPTION OF THE DRAWINGS

The present systems, methods, and apparatuses for are described in detail in connection with the attached drawing figures, which illustrate non-limiting examples of the disclosed subject matter, wherein:
FIG. 1 depicts an example of a computing environment that includes an API request generator in accordance with various embodiments of the present disclosure;
FIG. 2 depicts an example of a process for generating an API request in accordance with various embodiments of the present disclosure;
FIG. 3 depicts an example of a process for gathering API components in accordance with various embodiments of the present disclosure;
FIG. 4 depicts an example of a process for generating a graphical data structure in accordance with various embodiments of the present disclosure;
FIG. 5 depicts an example of a process for executing an execution level in accordance with various embodiments of the present disclosure;
FIG. 6 depicts example of a process for accounting for containers found in an API request in accordance with various embodiments of the present disclosure;
FIG. 7 depicts an example of an interface used in generating an API request in accordance with various embodiments of the present disclosure;
FIG. 8 depicts an example of a computing architecture that may be used in accordance with various embodiments of the present disclosure; and
FIG. 9 depicts an example of computing hardware suitable for supporting the operation of various embodiments of the present disclosure.

### DETAILED DESCRIPTION

This detailed description is provided in order to meet statutory requirements. However, this description is not intended to limit the scope of the disclosure. Rather, the claimed subject matter may be embodied in other ways, including different steps, different combinations of steps, different operations, different combinations of operations, different elements and/or components, and/or different combinations of elements and/or components, similar to those described in this disclosure and in conjunction with other present or future technologies and solutions. Moreover, although the term "Operation" may be used herein to identify different elements of methods employed, the term should not be interpreted as implying any particular order among or between different elements except when the order is explicitly described as such.

### Overview

As noted, the complexity of using an API specification in generating an API request for a specific use case can prove to be quite a technical challenge for many software developers. This is because the API specification can often be a very convoluted document that is difficult for the software developer to follow in generating an API request for his or her specific use case. As a result, software developers are often confronted with the difficult task of generating API requests that is both time consuming and riddled with errors.

Various embodiments of the present disclosure address this technical challenge encountered by software developers in generating API requests for specific use cases by providing a novel API request generator that enables software developers to craft tailored API requests aligned with their specific use cases. In particular embodiments, the API request generator allows a developer to describe a specific use case for an API in natural language. The API request generator then utilizes a specification for the API in generating a custom API request body for the specific use case that requires little to no modifications. As a result, embodiments of the API request generator can reduce errors in generating the API request for the specific use case, reduce the time it takes to make a first API call using the API request, and streamline the development workflow for generating a software application utilizing the API request, while enhancing overall developer satisfaction.

In various embodiments, the API request generator provides an interface that allows a user (e.g., a software developer) to enter a specific (e.g., custom) use case via a natural language prompt. For example, the user may be developing a software application for promoting vacationing in the state of Florida. The user is including functionality within the software application that allows a party to request a weather forecast for a particular number of days for one or more areas of Florida. For example, the functionality may allow a party to request the weather forecast for the next seven days in Key West. The user is planning to acquire the weather data via an API that is available through a weather provider that can be accessed over the Internet. Therefore, the user must generate an API request that can call (e.g., query) the API and return the weather data needed for the user's use case.

The API request generator may be available to the user to access through one or more avenues. For example, the weather provider may provide a portal that is available over the Internet that allows access to the API request generator. As another example, a third party may provide the API request generator as a software-as-a-service (SaaS) through a portal that is accessible over the Internet. Here, the third party may have access to documentation on the weather provider's API (e.g., access to the specification of the API).

Once accessed, the API request generator may provide an interface that includes a prompt to allow the user to enter his or her specific use case in natural language. For example, the user may enter the phrase "Can you provide me with the weather forecast for the next seven days in Key West?" In addition, the interface may include a field that allows the user to identify the API. For example, the interface may include a dropdown field that lists the endpoints of the various APIs that are available through the API request generator and the user may select the endpoint for the weather data API from the dropdown field.

In various embodiments, the API request generator receives the use case and an identifier for the API and accesses data from a specification for the API. For example, the API request generator may access a library (e.g., database) stored on one or more storage media that includes the specifications for a variety of APIs. Therefore, the API request generator may use the identifier for the API in accessing the specification for the API found in the library. In another example, the API request generator may request the specification from the provider of the API or from a third party that has access to the specification.

Depending on the embodiment, the API request generator may access various types of data found in the specification for the API. For example, the API request generator may access a set of parameters that are provided in a request for the API. Each parameter may include information about the parameter such as, for example, a data type for the parameter, an example value for the parameter, a description of the parameter, an indicator as to whether the parameter is required, a default value for the parameter, and/or the like. Additionally, or alternatively, the API request generator may access a set of parameter dependencies. A parameter dependency defines a dependency (e.g., rule) between a value assigned to and/or a presence of a parent parameter and a value assigned to a child parameter. Generally, a child parameter that has a dependency to a parent parameter cannot be initialized with a value before a value has been initialized for the parent parameter and/or a presence of the parent parameter has been established because the value initialized for the child parameter is dependent on the value initialized for the parent parameter and/or the presence of the parent parameter.

In various embodiments, the API request generator generates a graphical data structure based at least in part on the data. For example, the API request generator may generate a graphical data structure that represents a directed acyclic graph of the set of parameters. The graphical data structure may include a set of vertices and a set of edges. Each of the vertices may represent a parameter from the set of parameters and each of the edges may connect a first vertex and a second vertex from the set of vertices representing a parent parameter and a child parameter from the set of parameters in a direction representing a parent-child relationship between the parent parameter and the child parameter. Additionally, the edge may define a rule based at least in part on a parameter dependency that exists between the parent parameter and the child parameter. Further, the API request generator performs a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship.

At this point, in various embodiments, the API request generator generates a hierarchy of execution levels based at least in part on a longest path between a starting vertex of the set of vertices and an ending vertex of the set of vertices as shown in the topological sort. The execution levels resemble a hierarchy in that each execution level includes a subset of parameters from the set of parameters that can be initialized without any parameters from the set of parameters assigned to a subsequent execution level in the hierarchy of execution levels having to be initialized.

In particular embodiments, the API request generator utilizes a large language model in processing the hierarchy of execution levels to generate values for the subset of parameters found in each of the execution levels. A large language model ("LLM") is a type of artificial intelligence that is generally trained on massive amounts of text data, allowing the model to understand and generate human language, perform tasks, answer questions, write different text formats, respond to prompts in a coherent and contextually relevant way, and/or the like. For example, many LLMs are based on deep learning neural networks, particularly "transformer" architectures, which allow them to analyze relationships between words within a set of words, such as a sentence, effectively. For this reason, the API request generator utilizes an LLM in particular embodiments in analyzing the use case that has been provided in natural language. In some embodiments, a machine learning platform may be utilized to allow for customizing the LLM used in processing the hierarchy of execution levels to generate the values for the set of parameters.

For each execution level, the API request generator processes the subset of parameters, the rule associated with each edge of the set of edges connected to the second vertex representing the child parameter from the subset of parameters, and the use case using the LLM to generate a response that includes a set of values for the subset of parameters. In some embodiments, the API request generator processes the subset of parameters, the rule associated with each edge, and the use case for an execution level by generating a set of execution sublevels for each execution level. The API request generator may perform this operation to generate inputs for the LLM having a prompt size that will avoid potentially overwhelming the large language model. For example, the API request generator may use a prompt template in generating an estimated prompt size for each parameter in the subset of parameters. The API request generator may then generate the set of execution sublevels based at least in part on the estimated prompt size for each parameter so that each execution sublevel comprises a group of parameters from the subset of parameters having a sum of their estimated prompt sizes that satisfies a threshold size.

Once the set of execution sublevels has been generated, the API request generator generates an input for each execution sublevel that includes the group of parameters, the rule associated with each edge of the set of edges connected to the second vertex representing the child parameter from the group of parameters, and the use case. For example, the API request generator may generate the input by again using the prompt template to generate a prompt that includes the group of parameters, the rule associated with each edge, and the use case. In addition, the API request generator may include additional information in the input for each execution sublevel that can facilitate customizing the LLM such as instructions directing a behavior of the LLM and/or at least one of hyperparameters or a generation configuration for the LLM along with the prompt. The API request generator then processes the input for each execution sublevel using the LLM to generate the response for the corresponding execution level.

In various embodiments, the API request generator forms an assembly of values for the API request by parsing the response for each of the hierarchy of execution levels to retrieve the set of values for the set of parameters. The API request generator may then generate the API request for the specific use case in which each parameter for the set of parameters is initialized with a value from the assembly.

Additionally, or alternatively, the API request generator in various embodiments may be configured to account for container parameters that may be provided in the body of a generated API request. Often, an API request may contain parameters in the form of data objects, referred to as "containers." A container parameter includes a collection of parameters "contained" within the container parameter. For example, a container parameter may be a JSON object that is a structured collection of key/value pairs enclosed in curly braces, used to store and exchange data. Each key/value pair may include a string key (name) and a value. Therefore, container parameters are unlike primitive parameters in that container parameters involve a collection of values and not simply a single, immutable value such as a string or number.

Accordingly, in various embodiments, the API request generator is configured to account for relationships between multiple container parameters and/or relationships between container parameters and primitive parameters. For example, the specification for the API may define a container parameter RateRequest.Shipment.FreightShipmentInfo and a primitive parameter RateRequest.Shipment.ShipmentRatingOptions.FRSShipmentindicator. In addition, the specification may include a rule defining a relationship between the two parameters that states the container parameter is required if, and only if, the primitive parameter is present in the body of the API request. In this instance, the API request generator may account for this relationship using a container-representative data structure.

For example, the API request generator may generate a container-representative graphical data structure that represents a directed acyclic graph of a set of container parameters and a set of container-related parameters defined in the specification for the API. The set of container parameters includes the container parameters defined in the specification, as well as those parameters contained within the container parameters (e.g., key/value pairs). The set of container-related parameters includes primitive parameters having parent-child relationships with container parameters.

The container-representative graphical data structure may include a set of container-representative vertices and a set of container-representative edges. Each of the container-representative vertices may represent a container parameter or a container-related parameter from the set of container parameters or the set of container-related parameters. Each of the container-representative edges connects a first container-representative vertex and a second container-representative vertex from the set of container-representative vertices representing a parent container-representative parameter and a child container-representative parameter from the set of container parameters and/or the set of container-related parameters in a direction representing a parent-child container-representative relationship between the parent container-representative parameter and the child container-representative parameter. In addition, each container-representative edge defines a container-representative rule based at least in part on a container-representative parameter dependency that exists between the parent container-representative parameter and the child container-representative parameter.

Additionally, or alternatively, the API request generator may configure the container-representative graphical data structure to account for required parameters (e.g., key/value pairs) for a container parameter when the container parameter is present in the body of the API request. Here, the container parameter may be referred to as an ancestor, the required parameter may be referred to as a descendant, and the relationship between the two parameters may be referred to as an ancestor/descendent dependency.

In various embodiments, the API request generator accounts for these ancestor/descendent dependencies in the container-representative graphical data structure by defining a property for a container-representative vertex representing a descendent parameter that can be set to "true" to indicate the descendent parameter is required when a value has been assigned to the corresponding ancestor parameter. In some embodiments, the API request generator may also generate a tree data structure that models the descendent parameters (e.g., the set of key/value pairs) defined for each of the container parameters to aid in identifying the ancestor/descendant dependencies. For example, the API request generator may generate the tree data structure based at least in part on a naming convention used for the ancestor and descendent parameters. Additionally, or alternatively, the API request generator may generate the tree data structure based at least in part on a schema for a container parameter defined in the specification.

At this point, the API request generator is configured in various embodiments to perform operations to account for the container parameters similar to those performed on the data originally gathered from the specification as previously discussed. For example, the API request generator may perform a container-representative topological sort on the container-representative graphical data structure to generate a linear ordering of the set of container-representative vertices. More specifically, the API request generator may generate a linear ordering of the set of container-representative vertices such that for every container-representative edge connecting a first container-representative vertex representing a parent container-representative parameter and a second container-representative vertex representing a child container-representative parameter, the first container-representative vertex comes before the second container-representative vertex in the linear ordering based at least in part on the parent-child container-representative relationship between the parent container-representative parameter and the child container-representative parameter.

Additionally, or alternatively, the API request generator may generate a hierarchy of container-representative execution levels in a similar manner as the hierarchy of execution levels generated for the data originally gathered from the specification as previously discussed. For example, the API request generator may generate the hierarchy of container-representative execution levels based at least in part on a longest path between a starting container-representative vertex of the set of container-representative vertices and an ending container-representative vertex of the set of container-representative vertices as shown in the container-representative topological sort. The container-representative execution levels resemble a hierarchy in that each container-representative execution level includes a subset of container-representative parameters from the set of container parameters and/or the set of container-related parameters that can be initialized without any container parameters and/or container-related parameters from the set of container parameters and the set of container-related parameters assigned to a subsequent container-representative execution level in the hierarchy of container-representative execution levels having to be initialized.

For each container-representative execution level, the API request generator processes the subset of container-representative parameters, the container-representative rule associated with each container-representative edge of the set of container-representative edges connected to the second container-representative vertex representing the child container-representative parameter found in the subset of container-representative parameters, and the use case using the LLM to generate a container-representative response that includes a set of container-representative values for the subset of container-representative parameters. In some embodiments, the API request generator processes the subset of container-representative parameters, the container-representative rule associated with each container-representative edge, and the use case for a container-representative execution level by generating a set of container-representative execution sublevels for each container-representative execution level in a similar manner as previously discussed for the hierarchy of execution levels initially generated for the data gathered from the specification for the API.

Once the set of container-representative execution sublevels has been generated, the API request generator generates an input for each container-representative execution sublevel that includes a group of container-representative parameters from the subset of container-representative parameters, the container-representative rule associated with each container-representative edge of the set of container-representative edges connected to the second container-representative vertex representing the child container-representative parameter from the group of container-representative parameters, and the use case in a manner as previously discussed.

Once the API request generator has processed all the container-representative execution levels, the API request generator may identify required parameters (e.g., required key/value pairs) that are found in each of the container parameters that has been assigned a value and is present in the API request. For example, the API request generator may identify the required parameters by setting a required property for each corresponding vertex found in the container-representative data structure for required parameters to "true." Additionally, or alternatively, the API request generator may identify the required parameters based at least in part on the ancestor/descendant dependencies identified in the tree data structure.

At this point, the API request generator may merge the set of values generated for each execution level in the hierarchy of execution levels performed initially on the data obtained from the specification and the set of container-representative values for each container-representative execution level in the hierarchy of container-representative execution levels to form the assembly of values used in generating the API request for the specific use case. For example, the API request generator may update the set of values generated for each execution level in the hierarchy of execution levels performed initially on the data based at least in part on the set of container-representative values for each container-representative execution level in the hierarchy of container-representative execution levels to form the assembly of values. The API request generator may then generate the API request for the specific use case in which each parameter for the set of parameters is initialized with a value from the assembly.

As a result, embodiments of the API request generator enable a user to enter a specific (e.g., custom) use case for using an API via a natural language prompt and receive an appropriate API request body that saves the user time and effort in writing the API request for the API with the necessary parameters (e.g., fields). Accordingly, embodiments of the API request generator simplify the process of creating API requests for specific uses cases by leveraging API specifications (e.g., documentation) to assist users in identifying and deriving the necessary API parameters for the specific use cases, as well as providing users with intuitive resources to streamline the integration process of APIs into software applications and accelerate development of such software applications.

### Example Computing Environment

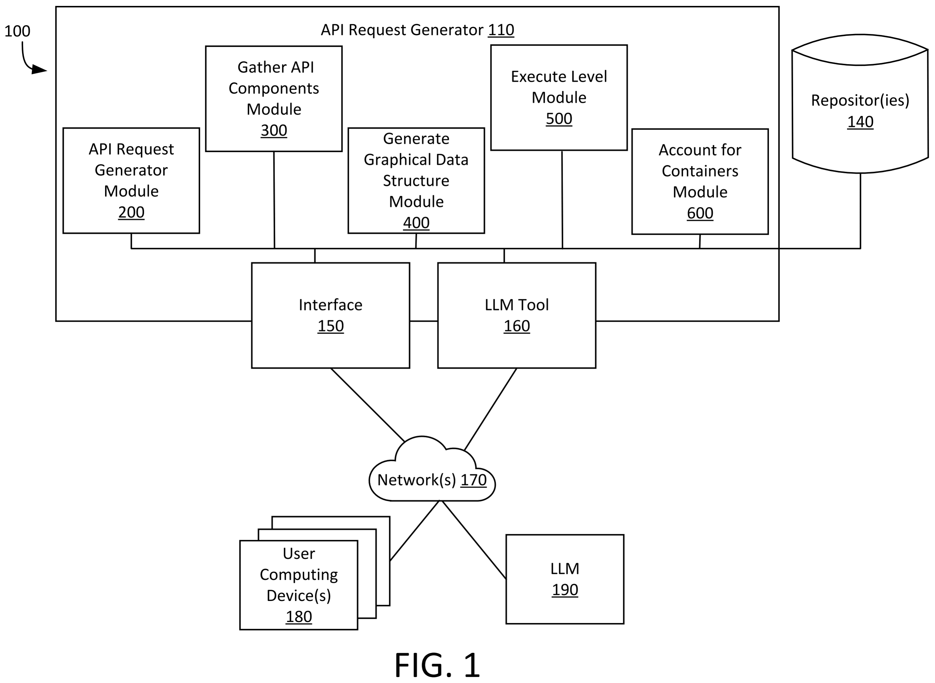

FIG. 1 depicts an example of a computing environment 100 that can be used for generating an API request for a specific use case in accordance with various embodiments of the present disclosure. In various embodiments, the computing environment 100 includes an API request generator 110 that provides a generate API request service to users to allow for generating API requests for APIs based at least in part on specific use cases. For example, the API request generator 110 may be associated with a particular entity who provides various services available through different APIs of the entity that are accessible over a network such as the Internet. As another example, the API request generator 110 may be associated with a third-party entity who provides the API request generator as a SaaS over the Internet that allows users to generate API requests for specific use cases for APIs provided by several different entities.

An interface 150 may provide users with access to the API request generator 110. For example, the interface 150 may be a portal (e.g., a web application) that users can access through a web browser on their user computing devices 180, such as personal computers, laptops, tablets, mobile devices, and/or the like, over one or more networks 170 (e.g., the Internet, cellular network, etc.). Additionally, or alternatively, the interface 150 may be a software application that users can install on their user computing devices 180 to access the API request generator 110. In addition, the API request generator 110 may access an LLM 190 through some type of LLM tool 160 that allows the API request generator to submit calls (e.g., input) to the LLM 190 to solicit responses providing values for parameters associated with generating API requests for specific use cases. For example, the LLM tool 160 may be a function, an API, or some other resource the LLM can interact with.

In various embodiments, the API request generator 110 may execute different modules in performing functionality for generating API requests for various APIs. For example, the API request generator 110 may execute an API request generator module 200 to process user input and generate an API request for a specific use case. Additionally, or alternatively, the API request generator 110 may execute a gather API components module 300 to gather components from an API specification needed in generating an API request for an API. Additionally, or alternatively, the API request generator 110 may execute a generate graphical data structure module 400 to generate a graphical data structure to represent the components retrieved from an API specification. Additionally, or alternatively, the API request generator 110 may execute an execute level module 500 to process an execution level in generating values for a subset of parameters found in the execution level. Additionally, or alternatively, the API request generator 110 may execute an account for containers module 600 to account for structured data elements (e.g., "containers") that make up part of an API request. Accordingly, the API request generator 110 may comprise software and/or hardware components for executing the API request generator module 200, the gather API components module 300, the generate graphical data structure module 400, the execute level module 500, and/or the account for containers module 600.

Further, in various embodiments, the API request generator 110 may access one or more repositories 140 used for storing API specifications for different APIs. Accordingly, the one or more repositories 140 may be situated locally or remotely from the API request generator 110. For example, the one or more repositories 140 may reside within a same system in which the API request generator 110 also resides and is accessed over a local network (e.g., a LAN) by the API request generator 110. Alternatively, the one or more repositories 140 may reside within a third-party system that is remote from the API request generator 110 and is accessed over a network (e.g., the Internet) facilitating remote access by the API request generator 110. Further detail is now provided regarding the configuration and functionality of the API request generator module 200, the gather API components module 300, the generate graphical data structure module 400, the execute level module 500, and the account for containers module 600 according to various embodiments of the disclosure.

### API Request Generator Module

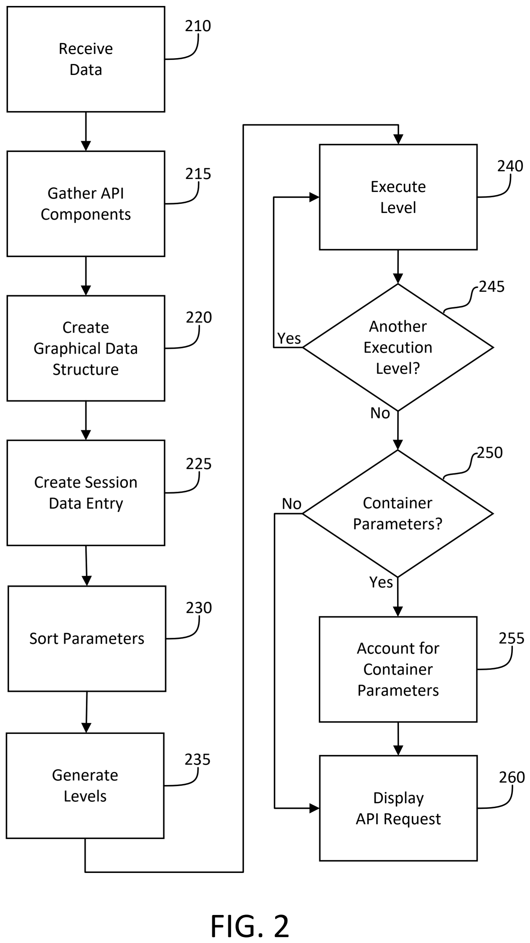

Turning now to FIG. 2, additional details are provided regarding an API request generator module 200 for generating an API request in accordance with various embodiments of the disclosure. The flow diagram shown in FIG. 2 may correspond to operations carried out, for example, by computing hardware found within a system in which the API request generator 110 resides as described herein, as the computing hardware executes the API request generator module 200.

As previously discussed, the API request generator 110 may provide some type of interface that allows a user to enter a use case via a natural language prompt and to select a particular API for which the user wishes to generate an API request based at least in part on the use case. For example, the user may be developing a software application for her company that frequently ships various pressurized gas used in the medical industry around the World. As a specific example, the company may frequently ship laughing gas (nitrous oxide) to various surgical and/or dental facilities around the World. The user is planning to include functionality within the software application to allow an employee to conduct an acceptance audit check with a shipping company to determine whether a canister of laughing gas is acceptable by the shipping company to ship to a specific location. Therefore, the user is interested in generating an API request to embed within her software application that can be submitted to an API provided by the shipping company for performing such an audit check.

The interface may provide a text field that allows the user to type in a specific use case in natural language and the user may type into the field "I'm going to ship a canister of laughing gas that is highly pressurized from the Morris Road office to South Korea." In addition, the interface may provide some type of field that allows the user to identify the API the user is interested in soliciting with respect to the software application. For example, the interface may provide a dropdown field listing endpoints of different APIs available through the shipping company and the user selects the endpoint "dangerousGoods_acceptanceAuditPrecheck" for the desired API.

Therefore, the process involves the API request generator module 200 receiving the use case and an identifier for the API in Operation 210. In turn, the API request generator module 200 gathers components needed for generating an API request for the API in Operation 215. In various embodiments, the API request generator module 200 performs this operation by invoking a gather API components module 300. In turn, the gather API components module 300 gathers the API components from an API specification for the selected API.

For example, the gather API components module 300 may access the API specification and identify a set of parameters that are required to be provided in an API request for the API. A parameter is generally considered a field provided in the API request that is typically initialized with a value for the API to use in processing the API request for the use case. In some instances, the parameter may be considered a primitive type in that the parameter represents a single field and is initialized with a single value. In other instances, the parameter may be considered a container type in that the parameter may represent a collect of fields and is initialized with multiple values. Additionally, or alternatively, the gather API components module 300 may identify a set of parameter dependencies that exists between different parameters found within the set of parameters. Parameter dependencies may exist in instances where values initialized for certain parameters are dependent on the values that have been initialized for other parameters.

As an illustrative example, a first parameter may be initialized with the value "true" if a second parameter is initialized with a value that satisfies a threshold, and the first parameter may be initialized with the value "false" if the second parameter is initialized with a value that does not satisfy the threshold. As another illustrative example, a first parameter may be required to be initialized with a value if a second parameter has been initialized with a value, and the first parameter may not be required to be initialized with a value if the second parameter has not been initialized with a value.

In both these instances, dependencies exist between the first and second parameters in that the value initialized for the first parameter is dependent on the value initialized for the second parameter. The dependencies can also be viewed as a parent-child relationship that exists between the first and second parameters where the second parameter serves as the parent parameter and the first parameter serves as the child parameter.

Additionally, or alternatively, parameter dependencies may exist where certain parameters are required to be initialized when other parameters have been initialized and are present in the API request. As an illustrative example, a RateRequest. Shipment.PaymentInfo.Type parameter is required when a RateRequest.Shipment.PaymentInfo is present in the API request. This dependency can be viewed as an ancestor-descendent relationship that exists between the two parameters where the first parameter serves as the descendent parameter and the second parameter serves as the ancestor parameter. Once the gather API components module 300 has gathered the components, the gather API components module 300 may return the components to the API request generator module 200 and/or may store the components so that they are available to generate the API request.

In Operation 220, the API request generator module 200 generates a graphical data structure that represents the components gathered for the API request. For example, the API request generator module 200 may generate a graphical data structure that includes a set of vertices and a set of edges in which each vertex of the set of vertices represents a parameter from the set of parameters, and each edge of the set of edges connects a first vertex and a second vertex from the set of vertices representing a parent parameter and a child parameter from the set of parameters. In some embodiments, each edge may connect the first vertex and the second vertex in a direction representing a parent-child relationship between the parent parameter and the child parameter. In addition, each edge may define a rule based at least in part on a parameter dependency from the set of parameter dependencies that exists between the first parameter and the second parameter.

In particular embodiments, the API request generator module 200 performs the operation of generating the graphical data structure by invoking a generate graphical data structure module 400. The generate graphical data structure module 400 creates the set of vertices and edges and then populates the vertices and edges into the graphical data structure based at least in part on the set of parameters and the set of parameter dependencies found in the data gathered from the API specification. Accordingly, in some embodiments, the graphical data structure may represent a directed acyclic graph. A directed acyclic graph includes vertices and edges with each edge directed from one vertex to another, such that those directions will never form a closed loop. As a result, the directed acyclic graph may represent a flow for initializing the parameters with values based at least in part on the set of dependencies so that parent parameters are initialized prior to child parameters.

In Operation 225, the API request generator module 200 creates a session data entry that establishes the user 's session to generate the API request. The API request generator module 200 performs this operation in various embodiments so that the API request generator module 200 may use the session in tracking the progress of generating the API request. The API request generator module 200 may store various data in creating the session such as, for example, an initial version of the graphical data structure and metadata for the session such as an identifier for the user, a timestamp, the identifier for the API, and/or the use case. In addition to tracking the progress of generating the API request, storing the data may allow for the API request generator module 200 to restart the session for generating the API request if the session is lost for some reason and/or allow for the API request generator module 200 to roll back the process for generating the API request if the user would like to go back to a previous position in generating the API request for some reason.

In Operation 230, the API request generator module 200 performs a topological sort on the graphical data structure to generate a linear ordering of the set of vertices such that for every edge of the set of edges connecting a first vertex and a second vertex, the first vertex representing the parent parameter comes before the second vertex representing the child parameter in the linear ordering. In turn, the API request generator module 200 generates a hierarchy of execution levels based at least in part on a longest path between a starting vertex of the set of vertices and an ending vertex of the set of vertices as shown in the topological sort in Operation 235. The longest path is considered the longest possible route through the graphical data structure, considering the direction of edges and the absence of cycles.

In various embodiments, each execution level in the hierarchy of execution levels includes a subset of parameters from the set of parameters that can be initialized without any parameters from the set of parameters assigned to a subsequent execution level in the hierarchy of execution levels having to be initialized. Therefore, the API request generator module 200 generates the hierarchy of execution levels such that the subset of parameters found in each of the execution levels adheres to the linear ordering of the vertices across the execution levels. That is, in various embodiments, the API request generator module 200 may generate the execution levels in an order such that for any child parameter that is dependent on a parent parameter, the child parameter is placed into a subsequent execution level from the execution level that the parent parameter is placed into in the hierarchy of execution levels.

In Operation 240, the API request generator module 200 executes one of the execution levels found in the hierarchy of execution levels. In various embodiments, since the hierarchy of execution levels is ordered such that the subset of parameters found in each execution level adheres to the linear ordering of the vertices across the execution levels, the API request generator module 200 initially processes the first execution level found in the hierarchy of execution levels.

In various embodiments, the API request generator module 200 processes the execution level by invoking an execute level module 500. As discussed further herein, the execute level module 500 processes the first execution level found in the hierarchy of execution levels by generating and submitting input to an LLM to have the LLM generate a response that contains values to initialize the subset of parameters found in the execution level. The execute level module 500 may then update the graphical data structure to reflect the values initialized for the subset of parameters. For example, the execute level module 500 may populate a property for each of the vertices found in the graphical data structure with the corresponding value. In doing so, the execute level module 500 may build an assembly of values from the values generated for the subset of parameters as the execute level module 500 processes each of the execution levels found in the hierarchy of execution levels.

Additionally, or alternatively, the execute level module 500 may populate other properties of the vertices as a result of processing the execution level. For example, the execute level module 500 may populate a property of a vertex providing an explanation (e.g., reasoning) for choosing the value for the corresponding parameter, may populate a property of a vertex indicating the value for the corresponding parameter is an assumption, may populate a property of a vertex indicating whether the value for the corresponding parameter is needed for the use case. Further, the execute level module 500 may update other data for the session to reflect the processing of the execution level.

In various embodiments, the API request generator module 200 may access the graphical data structure and/or other data stored for the session to retrieve the data populated by the execute level module 500 and return a response to the user via the interface with respect to the execution level. For example, the API request generator module 200 may return a response that includes a session identifier for the session and/or an indicator as to whether the API request has been fully generated (e.g., as to whether the API request body is fully complete). Additionally, or alternatively, the API request generator module 200 may return a response that includes a portion of the API request body that has been generated as a result of processing the execution level. As an illustrative example, the API request generator module 200 may return a response such as:

```
 {
 "mustardSessionResponse": {
  "assumptions": [],
  "isDone": false,
  "request": {
   "AcceptanceAuditPreCheckRequest": {
    "Request": {
     "TransactionReference": {
      "CustomerContext": "Placeholder"
      }
    },
    "Shipment": {
     "Package": [
       {
        "ChemicalRecord": [
         {
          "AllPackedInOneIndicator": "true",
          "ChemicalRecordIdentifier": "Placeholder",
          "CommodityRegulatedLevelCode": "FR",
          "TransportCategory": "Placeholder"
         }
       ],
      ...
     "ShipFromAddress": {
      "AddressLine": "Morris Road",
      "City": "Placeholder",
      "CountryCode": "US",
      "PostalCode": "Placeholder",
      "StateProvinceCode": "Placeholder"
      },
     "ShipToAddress": {
      "AddressLine": "Placeholder",
      "City": "Placeholder",
      "CountryCode": "KR",
      "PostalCode": "Placeholder"
      },
     "ShipperNumber": "Placeholder"
    }
   },
   "header": {
    "transId": "Placeholder",
    "transactionSrc": "Placeholder"
   },
   "path": {
    "version": "v2"
   }
  },
  "sessionId": "e1b7c918-1c40-4b58-blc0-27f666cf71fd"
```

In this example, the response includes an indicator "isDone" that expresses the API request body is not complete. The response may indicate such because the API request generator module 200 has not processed all the execution levels found in the hierarchy of execution levels. In addition, the response includes a portion of the request body that has been generated based at least in part on processing the first execution level and the session identifier ("sessionId").

The user may reply to the display of the response by acknowledging to the API request generator module 200 to process the next sequential execution level found in the hierarchy of execution levels. For example, the interface may provide some type of mechanism (e.g., a button) for the user to select to indicate to the API request generator module 200 to process the next sequential execution level. In other embodiments, the API request generator module 200 may not require such acknowledgement from the user to process the next sequential execution level. For example, the API request generator module 200 may evaluate the "isDone" indicator to determine that another execution level needs to be processed. In response, the API request generator module 200 determines in Operation 245 that another execution level needs to be processed and returns to Operation 240 to process the next sequential execution level as previously discussed.

In various embodiments, the API request generator module 200 processes the next sequential execution level by deleting the parameters that have now been initialized from the longest path, which in turn removes the execution level from the hierarchy of execution levels that was previously processed by the API request generator module 200. Accordingly, the API request generator module 200 continues to process each of the remaining execution levels found in the hierarchy of execution levels until the last execution level has been processed, at which point the API request generator module 200 returns a response to the user that includes an indicator "isDone" that is true.

In some embodiments, the API request generator module 200 may be configured to treat each of the parameters initially as primitive types in initializing the parameters with values. However, as previously discussed, many API requests include parameters that are container types and represent a collection of values. Therefore, in various embodiments, the API request generator module 200 is configured to account for container parameters that may be present in the body of the API request.

For example, the API request generator module 200 may have set a parameter type property for each of the vertices indicating whether the vertex represents a primitive parameter or a container parameter during the generation of the graphical data structure. As a result, the API request generator module 200 may determine whether the API request may include at least one container parameter based at least in part on the parameter type property set for each of the vertices found in the graphical data structure in Operation 250. If the API request generator module 200 determines that the API request does not include any container parameters, then the API request generator may display the completed API request to the user via the interface in Operation 260.

However, if the API request generator module 200 determines that the API request may include at least one container parameter, then the API request generator module 200 accounts for the container parameters in Operation 255. In various embodiments, the API request generator module 200 performs this operation by invoking an account for containers module 600. As discussed further herein, the account for containers module 600 may perform a similar set of operations as the API request generator module 200 in processing container-representative execution levels to generate sets of container-representative values for container parameters present in the body of the API request, as well as for primitive parameters that have relationships with container parameters. The account for containers module 600 may then merge the sets of values generated for the original hierarchy of execution levels with the sets of container-representative values generated for the hierarchy of container-representative execution levels to form an assembly of values that account for container parameters present in the body of the API request that can be used by the API request generator module 200 in generating the API request.

At Operation 250, the API request generator module 200 displays the completed API request to the user via the interface. Additionally, or alternatively, the API request generator module 200 made identify which of the parameters found in the API request have been initialized with an assumption. As an illustrative example, the API request generator module 200 may return a response such as:

```
 "isDone": true,
 "sessionId": "d0a4d05a-7c90-496c-b654-d95d61cb171a",
 "assumptions": [
   {
    "AcceptanceAuditPreCheckRequest.Shipment.ShipFromAddress.CountryCode": {
     "generatedIsNeeded": "Needed",
     "generatedValue": "US",
     "isCorrect": true,
     "userCorrectedIsNeeded": null,
     "userCorrectedValue": null
   {
    "AcceptanceAuditPreCheckRequest.Shipment.ShipToAddress.CountryCode": {
     "generatedIsNeeded": "Needed",
     "generatedValue": "US",
     "isCorrect": true,
     "userCorrectedIsNeeded": null,
     "userCorrectedValue": null
    }
   },
   {
    "AcceptanceAuditPreCheckRequest.Shipment.Package.0.ChemicalRecord.0.Commodity
 RegulatedLevelCode": {
     "generatedIsNeeded": "Needed",
     "generatedValue": "FR",
     "isCorrect": true,
     "userCorrectedIsNeeded": null,
     "userCorrectedValue": null
    }
   }
  ],
 "request": {
   "AcceptanceAuditPreCheckRequest": {
    "Request": {
     "TransactionReference": {
      "CustomerContext": "Placeholder"
      }
    },
    "Shipment": {
     "Package": [
       {
        "ChemicalRecord": [
         {
          "AdditionalDescription": "Placeholder",
          "AllPackedInOneIndicator": "true",
          "ChemicalRecordIdentifier": "Placeholder",
          "ClassDivisionNumber": "Placeholder",
          "CommodityRegulatedLevelCode": "FR",
    ...
   "path": {
    "version": "v2"
   }
  },
  "sessionId": "d0a4d05a-7c90-496c-b654-d95d61cb171a"
 }
 }
```

In this example, the response now includes an indicator "isDone" that expresses the API request body is complete. In addition, the response includes an "assumptions" section that identifies three of the parameters have been initialized with values that are assumptions. Further, the response includes the API request with the parameters of the body initialized with values that have been identified by the LLM or defaulted to values that are assumptions. Note that in this example, some of the parameters have been initialized by the LLM with a "placeholder" value because the LLM was not able to identify a valid (e.g., correct) value based at least in part on processing the corresponding execution levels for the parameters. Here, the API request generator module 200 may also not have initialized the parameters with an assumption because a default value was not provided and/or because the parameters do not necessarily need to be initialized with a valid value for the API to be able to process the API request for the particular use case.

At this point, the user may submit the API request to solicit a response from the API for the use case. Additionally, or alternatively, the user may embed the API request into a software application for the specific use case. Additionally, or alternatively, the user may embed the API request into a software application in such a manner that one or more of the parameters may be dynamically changed to submit other use cases to the API. For example, the user may want to embed the API request and have functionality that allows for shipping laughing gas from the Morris Road office to other destinations besides South Korea. Accordingly, the user may use the generated API request as a template in embedding an API request into the software application that has such functionality.

In some embodiments, the API request generator module 200 may provide the parameters that were initialized with values that are assumptions as separate fields on the interface so that the user may clarify the values with corrected values if desired. If the user does decide to correct a value for a parameter, then the user may be asked to regenerate the API request because the parameter with the changed value may be a parent parameter for another parameter found in the API request and as a result may change the value initialized for the other parameter. In these instances, the API request generator module 200 may perform the operations over again as discussed herein with the added data of having the value clarified for the parameter.

For example, the API request generator module 200 may update the graphical data structure to reflect the clarification value. In addition, the API request generator module 200 may process the graphical data structure using a depth-first search algorithm to identify any impacted fields considering the clarification value. Accordingly, the API request generator module 200 may then perform the operations over again as discussed herein to revaluate the values assigned to the impacted fields.

### Gather API Components Module

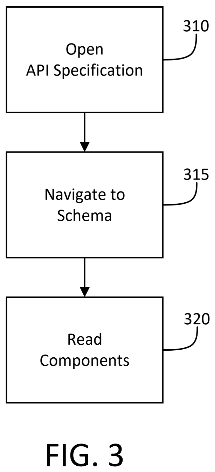

Turning now to FIG. 3, additional details are provided regarding a gather API components module 300 for gathering the components required in an API request for an API in accordance with various embodiments of the disclosure. The flow diagram shown in FIG. 3 may correspond to operations carried out, for example, by computing hardware found within a system in which the API request generator 110 resides as described herein, as the computing hardware executes the gather API components module 300.

As previously noted, the gather API components module 300 may be executed by the API request generator module 200 in various embodiments to gather the components required in an API request for a particular API. However, in other embodiments, the gather API components module 300 may be executed by other modules, and/or may be executed as a stand-along module.

The process involves the gather API components module 300 opening the API specification for the API in Operation 310. For example, the API request generator module 200 may have invoked the gather API components module 300 and provided the gather API components module 300 with an identifier for the API. Accordingly, the API specification may be provided in any number of different formats such as an OpenAPI format, a REST API format, a SOAP API format, and/or the like. In addition, the gather API components module 300 may access the API specification from various sources.

For example, the gather API components module 300 may access the API specification from a local repository 140 that is used to store a library of API specifications for different APIs. In another example, the gather API components module 300 may access the API specification from a remote source such as a repository 140 found in a system of an entity that is providing the API. Yet, in another example, the gather API components module 300 may access the API specification made available through a third party who may have a library of API specifications available for APIs available through different entities.

In Operation 315, the gather API components module 300 may navigate to a schema object for the API found in the API specification. For example, the schema name for the API may be stored in a dictionary (e.g., a lookup table) and the gather API components module 300 may access the dictionary and use the API identifier to retrieve the schema name. The gather API components module 300 may then use the schema name in navigating to the schema object for the API found in the API specification.

Once the gather API components module 300 has located the schema object for the API, the gather API components module 300 reads the components required for the API request from the API specification in Operation 320. For example, the schema object for the API may identify the parameters that are required for an API request made to the API. In addition, the schema object may identify various properties for each parameter. For example, the schema object may identify whether a parameter is a primitive type or a container type. Additionally, or alternatively, the schema object may identify a data type for a parameter. Additionally, or alternatively, the schema object may provide an example of a value for the parameter, may provide a description of the parameter, and/or may provide an indicator as to whether the parameter is required in an API request.

Additionally, or alternatively, the schema object may provide dependencies that exist for a parameter. As previously noted, such parameter dependencies may be viewed as parent-child relationships that a parameter shares with one or more other parameters found in the API request. Often, the order in which the parameter is initialized with a value is subject to the parent-child dependencies that the parameter has with respect to other parameters. Additionally, or alternatively, such parameter dependencies may be viewed as an ancestor-descendant relationship that a parameter shares with another parameter found in the API request. Often, the parameter may be required for the API request due to the ancestor-descendant relationship that the parameter has with another parameter that is present in the body of the API request.

Additionally, or alternatively, the schema object may provide other properties for a parameter . For example, the schema object may provide a default value to initialize the parameter when a value cannot be properly determined for the parameter, an indicator as to whether the parameter is provided by a user and therefore, should be initialized with a placeholder value, and/or any other information that may be of value in generating an API request for the API.

Accordingly, once the gather API components module 300 has gathered the components from the API specification for the API, the gather API components module 300 may return the API components to the API request generator module 200. In other embodiments, the gather API components module 300 may store the components in a storage medium, such as a repository 140, so that the components are available for generating an API request for a specific use case.

### Generate Graphical Data Structure Module

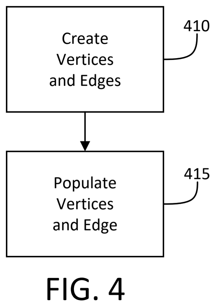

Turning now to FIG. 4, additional details are provided regarding a generate graphical data structure module 400 for generating a graphical data structure to represent the components required for an API request in accordance with various embodiments of the disclosure. The flow diagram shown in FIG. 4 may correspond to operations carried out, for example, by computing hardware found within a system in which the API request generator 110 resides as described herein, as the computing hardware executes the generate graphical data structure module 400.

As previously noted, the generate graphical data structure module 400 may be executed by the API request generator module 200 in various embodiments to generate a graphical data structure to represent the components required for an API request. In addition, the generate graphical data structure module 400 may be executed by the account for containers module 600 in various embodiments to generate a container-representative graphical data structure to represent the container and container-related components required for an API request. However, in other embodiments, the generate graphical data structure module 400 may be executed by other modules, and/or may be executed as a stand-along module.

It is noted that the generate graphical data structure module 400 is mainly discussed herein with respect to generating a graphical data structure to represent the components required for an API request. However, it should be understood that the generate graphical data structure module 400 performs similar operations in generating a container-representative graphical data structure to represent the container and container-related components required for an API request.

The process involves the generate graphical data structure module 400 creating a set of vertices and a set of edges for the graphical data structure in Operation 410. Accordingly, in various embodiments, the generate graphical data structure module 400 generates the set of vertices and the set of edges based at least in part on the components read from the API specification for the corresponding API. For example, the generate graphical data structure module 400 may generate a vertex for each of the parameters in the set of parameters found in the components read from the API specification. Additionally, or alternatively, the generate graphical data structure module 400 may generate an edge for each parameter dependency in the set of parameter dependencies found in the components read from the API specification.

It is noted that when generating a container-representative graphical data structure, the generate graphical data structure module 400 may generate a set of container-representative vertices and a set of container-related edges in a similar manner. However, in various embodiments, the generate graphical data structure module 400 may only generate a container-representative vertex for each of the container parameters and each of the primitive parameters having a parent-child relationship with a container parameter found in the components read from the API specification. Likewise, in various embodiments, the generate graphical data structure module 400 may only generate a container-representative edge for each parameter dependency in the set of parameter dependencies found in the components read from the API specification that represents a parent-child relationship between two container parameters or between a container parameter and a primitive parameter.

In Operation 415, the generate graphical data structure module 400 populates the graphical data structure with the set of vertices and the set of edges. The generate graphical data structure module 400 populates the graphical data structure with each vertex of the set of vertices to represent a parameter of the set of parameters. In addition, the generate graphical data structure module 400 may define various properties for the parameter represented by each of the vertices. For example, the generate graphical data structure module 400 may define a property indicating whether the parameter is a primitive type or a container type, a property indicating whether the parameter is required to be initialized with a value, a property providing a description of the parameter, a property for storing a value initialized for the parameter, a property for storing an explanation for initializing the parameter with the value, a property containing possible values that can be used to initialize the parameter, a property storing a default value for the parameter, a property indicating whether the default value has been used to initialize the parameter, a property indicating whether the parameter is need for the use case, and/or the like.

Further, the generate graphical data structure module 400 populates each edge of the set of edges in a manner that connects a first vertex and a second vertex from the set of vertices representing a parent parameter and a child parameter. Further, the generate graphical data structure module 500 defines a rule for the edge based at least in part on the parameter dependency that exists between the parent parameter and the child parameter. Furthermore, the generate graphical data structure module 500 may also define various properties for the parent-child relationship represented by the edge. For example, the generate graphical data structure module 400 may define a property identifying a value that is dependent on the parent-child relationship and/or a property identifying whether the dependency is current.

In various embodiments, the generate graphical data structure module 400 populates the graphical data structure with the set of vertices and the set of edges to form of a directed acyclic graph. A directed acyclic graph is a directed graph with no directed cycles. A directed acyclic graph includes vertices and edges, with each edge directed from one vertex to another, such that following those directions will never form a closed loop. Therefore, the generate graphical data structure module 400 may populate each edge to connect a first vertex and a second vertex in a direction representing a parent-child relationship that exists between a parent parameter and a child parameter represented by the first vertex and the second vertex.

An advantage of using a graphical data structure in the form of a directed acyclic graph in various embodiments is that a directed acyclic graph can be topologically ordered, by arranging the vertices as a linear ordering that is consistent with all edge directions. Therefore, the generate graphical data structure module 400 can generate a graphical data structure in the form of a directed acyclic graph that can be topologically ordered in a manner that represents an ordering of the set of parameters for purposes of initializing the set of parameters with values based at least in part on the set of parameter dependencies.

Depending on the embodiment, the generate graphical data structure module 400 may generate the graphical data structure using various types of data structures. For example, the generate graphical data structure module 400 may generate the graphical data structure as a key-value pair data structure such as a hashmap, an object, a dictionary, and/or the like. In general, a key-value pair data structure stores data such that each piece of information is associated with a unique "key" that allows for quick access to its corresponding "value." Accordingly, the generate graphical data structure module 400 may generate the graphical data structure as a key-value pair data structure that includes, for example, a set of first key-value pairs and a set of second key-value pairs where each of the first key-value pairs may include a jsonPath as a first key and a parameter object as a first value and each of the second key-value pairs may include a parent jsonPath as a second key and a list of edge objects as a second value.

### Execute Level Module

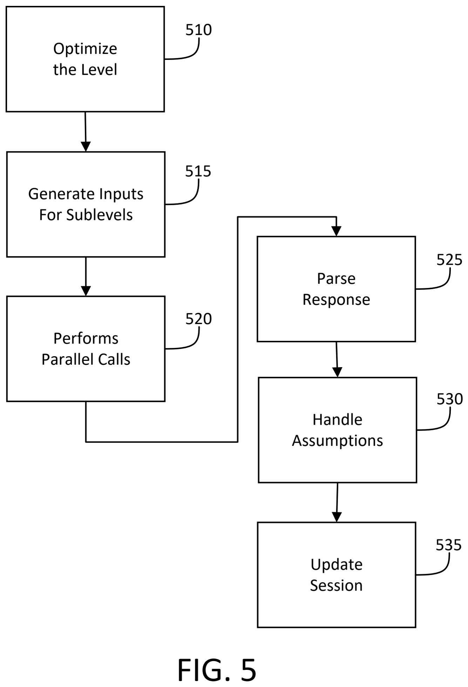

Turning now to FIG. 5, additional details are provided regarding an execute level module 500 for executing an execution level in accordance with various embodiments of the disclosure. The flow diagram shown in FIG. 5 may correspond to operations carried out, for example, by computing hardware found within a system in which the API request generator 110 resides as described herein, as the computing hardware executes the execute level module 500.

As previously noted, the execute level module 500 may be executed by the API request generator module 200 in various embodiments to execute an execution level found in a hierarchy of execution levels established for initializing a set of parameters required for an API request. In addition, the execute level module 500 may be executed by the account for containers module 600 in various embodiments to execute a container-representative execution level found in a hierarchy of container-representative execution levels established for initializing a set of container-representative parameters required for an API request. However, in other embodiments, the generate graphical data structure module 400 may be executed by other modules, and/or may be executed as a stand-along module.

It is noted that the execute level module 500 is mainly discussed herein with respect to executing an execution level found in a hierarchy of execution levels established for initializing a set of parameters required for an API request. However, it should be understood that the execute level module 500 performs similar operations in executing a container-representative execution level found in a hierarchy of container-representative execution levels established for initializing a set of container-representative parameters required for an API request.

Accordingly, the process involves the execute level module 500 optimizing the execution level to ensure that the execution level can be sufficiently processed by an LLM in Operation 510. A longest path can produce execution levels that contain many elements (e.g., parameters and/or parameter dependencies) that can potentially overwhelm an LLM in processing all at once. Therefore, in various embodiments, the execute level module 500 optimizes the execution level so that appropriate-sized prompts can be submitted to the LLM for processing.

In some embodiments, the execute level module 500 uses a prompt template to ensure that the LLM only receives a certain number of characters in any single prompt. In some embodiments, the execute level module 500 selects a prompt template based at least in part on whether the prompt is to include a request element modeling a parent-child relationship between two container parameters or between a container parameter and a primitive parameter.

Initially, the execute level module 500 may run the prompt template on the individual parameters found in the subset of parameters for the execution level to generate an estimated prompt size for each individual parameter. As an illustrative example, the execute level module 500 may run the prompt template on a parameter to generate a prompt for the parameter that may look like:

```
 {
    "RequestField": "AcceptanceAuditPreCheckRequest. Shipment. Package. 0. ChemicalRecord.0
    .CommodityRegulatedLevelCode",
    "Required": true,
    "UseCase": null,
    "Description": "Indicates the type of commodity. Valid values: LR, FR, LQ, EQ\n\nFR
         = Fully Regulated\nLQ = Limited Quantity\nEQ = Excepted Quantity\nLR = Lightly
          Regulated",
    "Explanation": "<Fill-In>",
    "Value": "<Fill-In>",
    "NeededForUseCase": "Needed"
```

In this example, the execute level module 500 may then determine that the parameter has an estimated prompt size of three-hundred and ninety-six characters.

In some embodiments, the execute level module 500 may then generate a set of execution sublevels for the execution level based at least in part on the estimated prompt size identified for each parameter. For example, the execute level module 500 may use the prompt template to process the subset of parameters for the execution level to generate a set of execution sublevels such that each execution sublevel includes a group of parameters from the subset of parameters for the execution level having a sum of the estimated prompt size for each parameter in the group of parameters satisfying a threshold size (e.g., being less than or equal to two-thousand characters).

Once the execute level module 500 has generated the set of execution sublevels for the execution level, the execute level module 500 generates input to the LLM for each of the execution sublevels in Operation 515. In various embodiments, the execute level module 500 performs this operation by processing each of the execution sublevels using the prompt template to generate a prompt for each execution sublevel. Accordingly, each of the prompts includes data that can be used by the LLM in initializing each parameter found in the group of parameters for the execution sublevel. For example, a prompt may include input data such as each of the parameters that is to be evaluated for the execution sublevel, the use case, a description of each of the parameters, and/or an appendix providing additional context for each of the parameters.

Additionally, or alternatively, the prompt may include for each parameter, the rules governing the parameter. The execute level module 500 may derive the rules from the parameter discrepancies affecting the parameter. For example, the execute level module 500 may access the graphical data structure in identifying the rules governing the parameter as defined for edges that are connected in the parameter in which the parameter serves as a child in a parent-child relationship with one or more other parameters. In addition, the execute level module 500 may retrieve the values initialized for the one or more other parameters to include along with the rules governing the parameter.

Further, the prompt may include fields that are to be filled in by the LLM. For example, the prompt may include a value field for storing the value to use in initializing the parameter. Additionally, or alternatively, the prompt may include a field that can be set to indicate whether the value for the parameter is needed or not for the use case (e.g., based on the input data). Additionally, or alternatively, the prompt may include an explanation field to provide an explanation (e.g., reasoning) for selecting the value for the parameter and/or for setting the field indicating whether the value for the parameter is needed or not for the use case.

In addition to the prompt, the execute level module 500 may include further information in generating the input for each of the execution sublevels. In some embodiments, the execute level module 500 may include system instructions for customizing the LLM. That is, the execute level module 500 may include system instructions for the LLM to use in generating a response to the input. For example, the execute level module 500 may include an objective for the LLM such as "You are an API request generator. Your job is to fill in Value, Explanation, and NeededForUseCase for a given prompt."

Additionally, or alternatively, the execute level module 500 may provide system instructions on the inputs and/or outputs, as well as system instructions on a thought process for the LLM to follow. For example, the execute level module 500 may provide system instructions on a thought process for the LLM to follow that includes "Use UseCase, Description, Rules, Appendix, and Explanation to determine logical values for Value and NeededForUseCase," and "If you cannot determine a reasonable Value then use 'placeholder."' Additionally, or alternatively, the execute level module 500 may provide system instructions that provide an example of a response (e.g., an output) expected from the LLM for the input.

In addition, the execute level module 500 may include hyperparameters and/or a generation configuration for the LLM in the input for each of the execution sublevels. For example, the execute level module 500 may provide the parameters "Temperature = 0, Top_P = 0, and Max_Output_Token = 3500."

At Operation 520, the execute level module 500 performs parallel calls to submit the inputs for the set of execution sublevels to the LLM. In response, the LLM processes each of the inputs and provides a response for each of the inputs that includes the same prompt with values filled in for the parameters. In addition, the LLM may provide metadata along with the response. For example, the LLM may provide a prompt token count that includes both the prompt and the system instructions, a candidate token count for the text found in the response that has been generated by the LLM, and/or a total token count that includes both the prompt token count and the candidate token count.

At Operation 525, the execute level module 500 parses the response for each input to retrieve the values for the subset of parameters. In addition, the execute level module 500 handles any assumptions that can be made for one or more parameters in Operation 530.

In some embodiments, the execute level module 500 may instruct the LLM to set a value for a parameter to a placeholder value ("placeholder") if the LLM is unable to determine a valid (e.g., correct) value for the parameter. In these instances, the execute level module 500 may set the value for the parameter to an assumption. For example, the parameter may be a ship to country code and the API specification, or some other source may have a property defined for the parameter that is a default value of "US." Therefore, the execute level module 500 may determine that the LLM has set the value for the ship to country code parameter to "placeholder" and as a result, the execute level module 500 may set the value to "US" as an assumption for the parameter.

Depending on the embodiment, the execute level module 500 may identify the default value from different sources. For example, the execute level module 500 may identify the default value from the API specification and/or the graphical data structure. In addition, in some embodiments, the execute level module 500 may not necessarily replace every value having a placeholder value with a value that represents an assumption. For example, certain parameters found in the subset of parameters for the execution level may not have a default value identified for the parameters.

At Operation 535, the execute level module 500 updates the session to reflect the values generated for the subset of parameters for the execution level to build out an assembly of values to use in generating the API request. In some embodiments, the execute level module 500 performs this operation by updating the graphical data structure to reflect the values initialized for the subset of parameters along with other properties for the subset of parameters such as, for example, whether a parameter has been initialized with a value that is an assumption, an explanation for selecting the value for a parameter, whether the value is needed for the use case, and/or the like. Additionally, or alternatively, the execute level module 500 may store the metadata returned by the LLM for the session. As a result of the execute level module 500 updating the session to include the data generated from processing the execution level, the data becomes available in various embodiments for use in generating the API request.

### Account for Containers Module

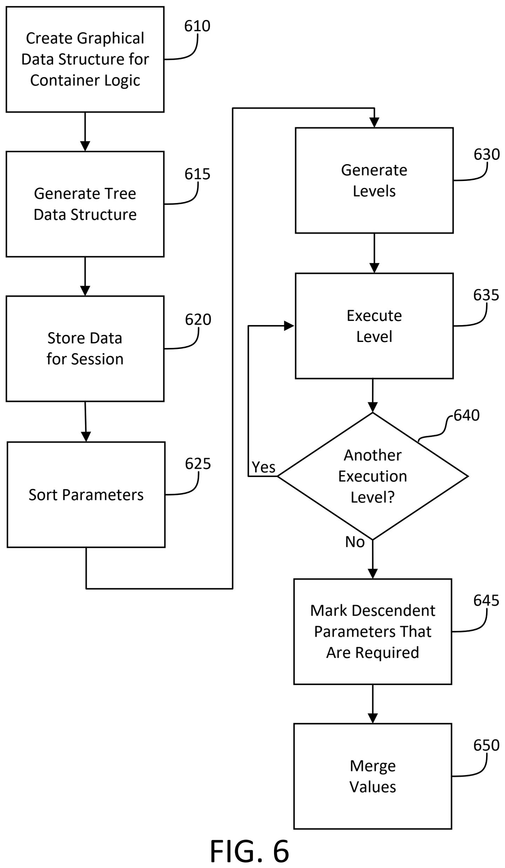

Turning now to FIG. 6, additional details are provided regarding an account for container module 600 to account for container parameters present in an API request that is generated in accordance with various embodiments of the disclosure. The flow diagram shown in FIG. 6 may correspond to operations carried out, for example, by computing hardware found within a system in which the API request generator 110 resides as described herein, as the computing hardware executes the account for containers module 600.

As previously noted, the account for containers module 600 may be executed by the API request generator module 200 in various embodiments to account for container parameters present in the API request that is generated. However, in other embodiments, the account for containers module 600 may be executed by other modules, and/or may be executed as a stand-along module.

The process involves the account for containers module 600 generating a container-representative graphical data structure to represent the container and container-related components gathered for the API request in Operation 610. In various embodiments, the container and container-related components may include parameters found in the components gathered for the API request that are defined as a container type (e.g., a set of container parameters), as well as parameters found in the components gathered for the API request that are defined as a primitive type and have parent-child relationships with parameters having a container type (e.g., a set of container-related parameters).

The account for containers module 600 may generate a container-representative graphical data structure that includes a set of container-representative vertices and a set of container-representative edges in which each container-representative vertex of the set of container-representative vertices represents a container parameter or a container-related parameters from the set of container parameters or the set of container-related parameters, and each container-representative edge of the set of container-representative edges connects a first container-representative vertex and a second container-representative vertex from the set of container-representative vertices representing a parent container-representative parameter and a child container-representative parameter from the set of container parameters and/or the set of container-related parameters.

In some embodiments, each container-representative edge may connect the first container-representative vertex and the second container-representative vertex in a direction representing a parent-child relationship between the parent container-representative parameter and the child container-representative parameter. In addition, each container-representative edge may define a rule based at least in part on a parameter dependency from the set of parameter dependencies that exists between the first container-representative parameter and the second container-representative parameter.

As previously noted, the account for containers module 600 in various embodiments performs the operation of generating the container-representative graphical data structure by invoking a generate graphical data structure module 400 and the generate graphical data structure module 400 creates the set of container-representative vertices and the set of container-representative edges. In addition, the generate graphical data structure module 400 populates the container-representative vertices and container-representative edges into the container-representative graphical data structure based at least in part on the set of container parameters, the set of container-related parameters, and the set of parameter dependencies for the set of container parameters and the set of container-relate parameters found in the data gathered from the API specification.

In some embodiments, the container-representative graphical data structure may represent a directed acyclic graph that represents a flow for initializing the container parameters and/or the container-related parameters with values based at least in part on the set of dependencies so that parent container-representative parameters are initialized prior to child container-representative parameters. Additionally, or alternatively, the container-representative graphical data structure may be configured to account for required parameters (e.g., descendent parameters) for a container parameter (e.g., ancestor parameter) when the container parameter is present in the body of the API request. For example, each of the container-representative vertices found in the container-representative graphical data structure may include a required property that can be set to "true" to indicate that a descendent parameter represented by a container-representative vertex is required when a value has been assigned to the corresponding ancestor parameter and is present in the body of the API body.

In addition, the account for containers module 600 may generate a tree data structure that models the descendent parameters defined for each of the container parameters to aid in identifying the ancestor/descendant dependencies in Operation 615. In some embodiments, the account for containers module 600 may generate the tree data structure based at least in part on a naming convention used for the ancestor and descendent parameters found in the API specification. For example, the API specification may identify a first parameter named RateRequest.Shipment.FRSPaymentInfo and a second parameter named RateRequest.Shipment.FRSPaymentInfo.Type. Accordingly, the account for containers module 600 may recognize that the second parameter is a descendant of the first parameter based at least in part on the names of the first and second parameters.

Additionally, or alternatively, the account for containers module 600 may generate the tree data structure based at least in part on a schema for a container parameter defined in the API specification. For example, the API specification may define a schema as:

```
   "FRSPaymentInfo": {
    "AccountNumber": "UPS Account Number",
    "Type": {
     "Code": "01",
     "Description": "Prepaid"
    }
   }
```

In this example, the account for containers module 600 determines that the parameter "Type" is a descendent of the parameter "FRSPaymentInfo" because the parameter "Type" is "contained" within the parameter "FRSPaymentInfo" (within the curly braces thereof).

In Operation 620, the account for containers module 600 store data for the session such as, for example, an initial version of the container-representative graphical data structure. Although in some embodiments, the account for containers module 600 may not perform this operation, as previously noted, storing the data may allow for the account for containers module 600 or another module to restart the session for generating the API request if the session is lost for some reason and/or allow for the account for containers module 600 or some other module to roll back the process for accounting for the container parameters in the API request if the user would like to go back to a previous position in generating the API request for some reason.

In Operation 625, the account for containers module 600 performs a topological sort on the container-representative graphical data structure to generate a linear ordering of the set of container-representative vertices such that for every container-representative edge of the set of container-representative edges connecting a first container-representative vertex and a second container-representative vertex, the first container-representative vertex representing the parent container-representative parameter comes before the second container-representative vertex representing the child container-representative parameter in the linear ordering. In turn, account for containers module 600 generates a hierarchy of container-representative execution levels based at least in part on a longest path between a starting container-representative vertex of the set of container-representative vertices and an ending container-representative vertex of the set of container-representative vertices as shown in the topological sort in Operation 630. The longest path is considered the longest possible route through the container-representative graphical data structure, considering the direction of container-representative edges and the absence of cycles.

In various embodiments, each container-representative execution level in the hierarchy of container-representative execution levels includes a subset of container-representative parameters from the set of container parameters and/or the set of container-related parameters that can be initialized without any parameters from the set of container parameters and the set of container-related parameters assigned to a subsequent container-representative execution level in the hierarchy of container-representative execution levels having to be initialized. Therefore, the account for containers module 600 generates the hierarchy of container-representative execution levels such that the subset of container-representative parameters found in each of the container-representative execution levels adheres to the linear ordering of the container-representative vertices across the container-representative execution levels. That is, in various embodiments, the account for containers module 600 may generate the container-representative execution levels in an order such that for any child container-representative parameter that is dependent on a parent container-representative parameter, the child container-representative parameter is placed into a subsequent container-representative execution level from the container-representative execution level that the parent container-representative parameter is placed into in the hierarchy of container-representative execution levels.

In Operation 635, the account for containers module 600 executes one of the container-representative execution levels found in the hierarchy of container-representative execution levels. In various embodiments, since the hierarchy of container-representative execution levels is ordered such that the subset of container-representative parameters found in each container-representative execution level adheres to the linear ordering of the container-representative vertices across the container-representative execution levels, the account for container module 600 initially processes the first container-representative execution level found in the hierarchy of container-representative execution levels.

In various embodiments, the account for containers module 600 processes the container-representative execution level by invoking an execute level module 500. As previously discussed, the execute level module 500 processes the container-representative execution level by generating and submitting input to an LLM to have the LLM generate a response that contains values to initialize the subset of container-representative parameters found in the container-representative execution level. The execute level module 500 may then update the container-representative graphical data structure to reflect the values initialized for the subset of parameters. For example, the execute level module 500 may populate a property for each of the container-representative vertices found in the container-representative graphical data structure with the corresponding value. In doing so, the execute level module 500 may build an assembly of container-representative values from the values generated for the subset of container-representative parameters as the execute level module 500 processes each of the container-representative execution levels found in the hierarchy of container-representative execution levels.

Additionally, or alternatively, the execute level module 500 may populate other properties of the container-representative vertices as a result of processing the container-representative execution level. For example, the execute level module 500 may populate a property of a container-representative vertex providing an explanation (e.g., reasoning) for choosing the value for the corresponding container or container-related parameter, may populate a property of a container-representative vertex indicating the value for the corresponding container or container-related parameter is an assumption, may populate a property of a container-representative vertex indicating whether the value for the corresponding container or container-related parameter is needed for the use case. Further, the execute level module 500 may update other data for the session to reflect the processing of the container-representative execution level.

Similar to the API request generator module 200, the account for containers module 600 in various embodiments may access the container-representative graphical data structure and/or other data stored for the session to retrieve the data populated by the execute level module 500 and return a response to the user via the interface with respect to the container-representative execution level. The user may reply to the display of the response by acknowledging to the account for containers module 200 to process the next sequential container-representative execution level found in the hierarchy of container-representative execution levels.

In other embodiments, the account for containers module 600 may not require such acknowledgement from the user to process the next sequential container-representative execution level. For example, the account for containers module 600 may evaluate an "isDone" indicator to determine that another container-representative execution level needs to be processed. In response, the account for containers module 600 determines in Operation 640 that another container-representative execution level needs to be processed and returns to Operation 635 to process the next sequential container-representative execution level as previously discussed.

In various embodiments, the account for containers module 600 processes the next sequential container-representative execution level by deleting the container and/or container-related parameters that have now been initialized from the longest path, which in turn removes the container-representative execution level from the hierarchy of container-representative execution levels that was previously processed by the account for containers module 600. Accordingly, the account for containers module 600 continues to process each of the remaining container-representative execution levels found in the hierarchy of container-representative execution levels until the last container-representative execution level has been processed.

In Operation 645, the account for containers module 600 marks the descendent parameters that are required based at least in part on their corresponding ancestor parameters being present in the body of the API request. In various embodiments, the account for containers module 600 performs this operation by evaluating the container-representative graphical data structure to determine which container parameters have been initialized with a value during the processing of the hierarchy of container-representative execution levels. For those container parameters that have been initialized, the account for containers module 600 determines whether the container parameters have any descendent parameters. For example, the account for containers module 600 may traverse the tree data structure that models the descendent parameters defined for each of the container parameters to identify the ancestor/descendant dependencies that exist for the container parameters that have been initialized with a value. The account for containers module 600 may then set a required property to "true" for each container-representative vertex found in the container-representative graphical data structure representing a descendent parameter defined for a container parameter that has been initialized with a value and is present in the body of the API request.

In Operation 650, the account for containers module 600 merges the assembly of container-representative values into the assembly of values that was originally generated to form an assembly of values that accounts for container parameters and can be used in generating the API request. In various embodiments, the account for containers module 600 performs the merger of the assembly of container-representative values into the assembly of values by updating the values found in the assembly of values for the container parameters and the container-related parameters to reflect the values found in the assembly of container-representative values for the corresponding containers and/or container-related parameters. Additionally, or alternatively, the account for containers module 600 performs the merger of the assembly of container-representative values into the assembly of values by considering the required field set for the container-representative vertices for various container and/or container-related parameters. In some embodiments, the account for container module 600 is configured to ignore values found in the assembly of container-representative values when their corresponding container and/or container-related parameters are not represented in the assembly of values.

It is noted that in various embodiments, the functionality, or a portion of the functionality, of the account for containers module 600 may be incorporated into the API request generator module 200. For example, the API request generator module 200 may be configured to generate a graphical data structure that also accounts for the parent-child relationships between multiple container parameters and between container parameters and container-related parameters. Additionally, or alternatively, the API request generator module 200 may be configured to generate the tree data structure that models ancestor-descendent relationships between ancestor parameters and descendent parameters. Accordingly, in these embodiments, the API request generator module 200 may process execution levels that generate an assembly of values that may be used in initializing parameters required in an API request, as well as generate an assembly of values that may account for container parameters that are present in the body of the API request.

### Example Interface

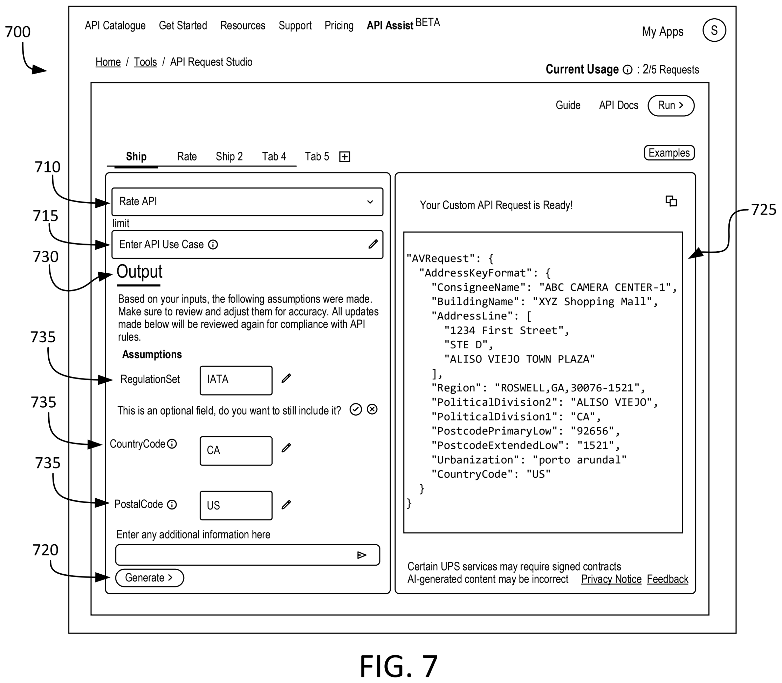

FIG. 7 provides an example interface 700 for the API request generator according to various embodiments. As shown in FIG. 7, the interface 700 provides a dropdown field 710 that enables a user to select an API for which the user would like to generate an API request for a specific use case. In addition, the interface 700 provides a freeform field 715 that allows the user to type in the specific use case in natural language.

As previously discussed, the user selects the desired API and enters the use case and then generates the API request through iterations in which the interface 700 continues to display the API request having portions of the API body completed with parameters initialized with values. For example, the interface 700 may provide the user with some type of mechanism such as a button 720 to perform the iterations. In various embodiments, the interface 700 may provide an indicator to the user after every iteration to identify whether the API request has been completed for the use case.

Upon completion, the interface 700 may display the completed API request 725 for the user. In addition, the interface 700 may display output 730 that includes parameters that have been set to values that are assumptions. Accordingly, the interface 700 may provide fields 735 for each of the parameters having values that are assumptions so that the user may clarify any one or more of the values and regenerate the API request.

### Example Technical Platforms

Embodiments of the disclosure may utilize various components such as computing systems and/or devices, storage devices, and/or the like, in performing various operations. Accordingly, these components involved in embodiments of the present disclosure may perform instructions that are implemented in various ways, including as computer program products that comprise articles of manufacture. Such computer program products may include one or more software components including, for example, software objects, methods, data structures, and/or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where various embodiments are described to use a computer-readable storage medium, other types of computer-readable storage media may be substituted for or used in addition to the computer-readable storage media described above.

Various embodiments of the present disclosure, and/or components thereof and/or that are utilized, may also be implemented as methods, apparatuses, systems, computing devices, computing entities, and/or the like. As such, various embodiments of the present disclosure, and/or components thereof and/or that are utilized, may take the form of a data structure, apparatus, system, computing device, computing entity, and/or the like executing instructions stored on a computer-readable storage medium to perform certain steps or operations. Thus, various embodiments of the present disclosure, and/or components thereof and/or that are utilized, also may take the form of entirely hardware, entirely computer program product, and/or a combination of computer program product and hardware performing certain steps or operations.

Various embodiments of the present disclosure, and/or components thereof and/or that are utilized, are described herein with reference to block diagrams and flowchart illustrations. Thus, each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some examples of embodiments, retrieval, loading, and/or execution may be performed in parallel such that multiple instructions are retrieved, loaded, and/or executed together. Thus, such embodiments can produce specially configured machines performing the steps or operations specified in the block diagrams and flowchart illustrations. Accordingly, the block diagrams and flowchart illustrations support various combinations of embodiments for performing the specified instructions, operations, or steps.

### Example System Architecture

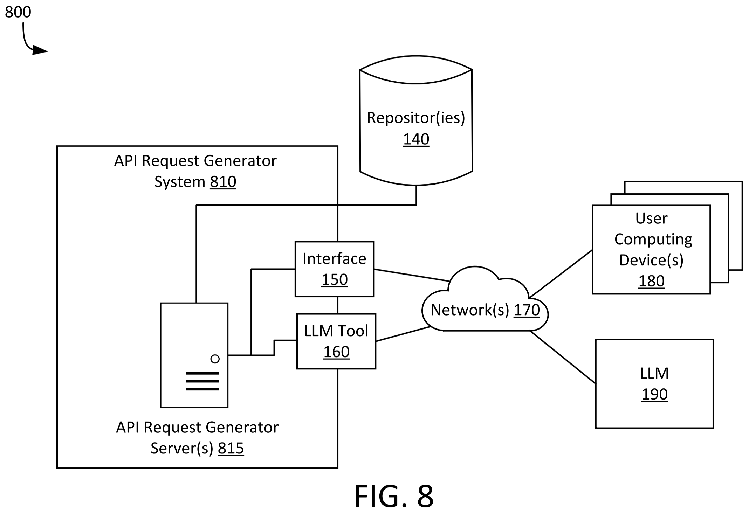

FIG. 8 is a block diagram of a system architecture 800 that can be used in generating API requests for specific use cases according to various embodiments of the disclosure as detailed herein. Components of the system architecture 800 are configured according to various embodiments to provide functionality configured to generate API requests through a generate API request service. As may be understood from FIG. 8, the system architecture 800 in various embodiments may include an API request generator computing system 810 that comprises one or more API request generator servers 815 and one or more data repositories 140 to facilitate such functionality.

In particular embodiments, the one or more API request generator servers 815 and repositories 140 are used as processing capacity and storage in supporting the generate API request service. For example, the one or more API request generator servers 715 may execute an API request generator module 200, a gather API components module 300, a generate graphical data structure module 400, an execute level module 500, and/or an account for containers module 600 as described herein in providing functionality for the generate API request service. In addition, the one or more data repositories 140 may be used for storing programs, data, and/or the like used in supporting the generate API request service. For example, the one or more data repositories 140 may be used for storing API specifications, graphical data structures, API requests, and/or the like as detailed herein.

The one or more API request generator servers 815 may be in communication with one or more user computing devices 180, as well as an LLM 190, over one or more networks 170 (e.g., the Internet, cellular, intranet, and/or the like). Accordingly, the API request generator server(s) 815 may be in communication over the network(s) 170 with the user computing devices 180 and/or with the LLM 190 to facilitate various functionality as described herein. To do so, the API request generator server(s) 815 may interface with the user computing devices 180 via an interface 150 such as, for example, a Web application, desktop application, mobile application, and/or the like. In addition, the API request generator server(s) 815 may interface with the LLM 190 via one or more LLM tools 160 such as one or more functions, APIs, and/or the like. Although the API request generator server(s) 815 and data repository(ies) 140 for the API request generator computing system 810 are shown as separate components, it should be understood that according to other embodiments, these components 815, 140 may comprise a single server and/or repository, a plurality of servers and/or repositories, or any other suitable configuration.

### Example Computing Hardware

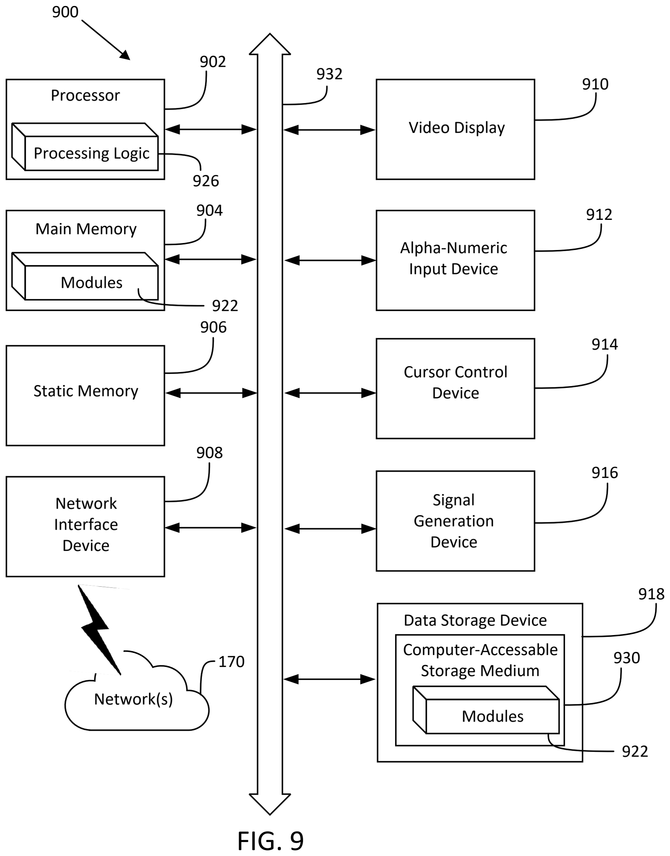

FIG. 9 illustrates a diagrammatic representation of an example of computing hardware 900 that can be used within the system architecture 800. For example, the computing hardware 900 may be one or more API request generator servers 815 as described in FIG. 8. In various embodiments, the computing hardware 900 may be connected (e.g., networked) to other computing hardware via a wireless network, a LAN, an intranet, an extranet, and/or the Internet. The computing hardware 900 may operate in the capacity of a server, a client computer in a client-server network environment, a peer computer in a peer-to-peer (or distributed) network environment, and/or the like. The computing hardware 900 may be, for example, a desktop personal computer (PC), a tablet PC, a set-top box (STB), a Personal Digital Assistant (PDA), a cellular telephone, a web appliance, a server, a network router, a switch or bridge, or any other computing hardware capable of executing a set of instructions (sequential or otherwise) that specify actions to be taken by the computing hardware 900. Further, while the computing hardware 800 is shown as a single computing entity in FIG. 9, the term "computing hardware" shall also be taken to include any collection of computing entities that individually or jointly execute a set (or multiple sets) of instructions to perform any one or more of the methodologies/functionalities described herein.

The computing hardware 900 includes a processing device 902, a main memory 904 (e.g., read-only memory (ROM), flash memory, dynamic random access memory (DRAM) such as synchronous DRAM (SDRAM) or Rambus DRAM (RDRAM), etc.), a static memory 906 (e.g., flash memory, static random access memory (SRAM), etc.), and a data storage device 918, which communicate with each other via a bus 932.

The processing device 902 represents one or more general-purpose processing devices such as a microprocessor, a central processing unit, and/or the like. More particularly, the processing device 902 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device 902 may also be one or more special-purpose processing devices such as an application specific integrated circuit (ASIC), a field programmable gate array (FPGA), a digital signal processor (DSP), network processor, or the like. The processing device 902 may be configured to execute processing logic 926 for performing various operations, steps, and/or the like as discussed herein.

The computing hardware 900 may further include a network interface device 908. The computing hardware 900 also may include a video display unit 910 (e.g., a liquid crystal display (LCD) or a cathode ray tube (CRT)), an alphanumeric input device 912 (e.g., a keyboard), a cursor control device 914 (e.g., a mouse), and a signal generation device 916 (e.g., a speaker).

The data storage device 918 may include a non-transitory computer-accessible storage medium 930 (also known as a non-transitory computer-readable storage medium or a non-transitory computer-readable medium) on which is stored one or more modules 922 (e.g., sets of instructions) as described herein. The modules 922 may also reside, completely or at least partially, within the main memory 904 and/or within the processing device 902 during execution thereof by the computing hardware 900. In this capacity, the main memory 904 and the processing device 902 can also constitute computer-accessible storage media. The modules 922 may further be transmitted or received over one or more networks 170 via a network interface device 908.

While the computer-accessible storage medium 930 is shown in FIG. 9 to be a single medium, the term "computer-accessible storage medium" should be understood to include a single medium or multiple media (e.g., a centralized or distributed database, and/or associated caches and servers) that store the one or more sets of instructions. The term "computer-accessible storage medium" should also be understood to include any medium that is capable of storing, encoding or carrying a module (e.g., a set of instructions) for execution by the computing hardware 900 and that cause the computing hardware 900 to perform any one or more of the methodologies/functionalities of the present disclosure. The term "computer-accessible storage medium" should accordingly be understood to include, but not be limited to, solid-state memories, optical and magnetic media, etc.

### System Operation

The logical operations described herein may be implemented (1) as a sequence of computer implemented acts or one or more program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, steps, structural devices, acts, or modules. These states, operations, steps, structural devices, acts, and modules may be implemented in software, in firmware, in special purpose digital logic, and any combination thereof. Greater or fewer operations may be performed than shown in the figures and described herein. These operations also may be performed in a different order than those described herein.

Embodiment 1: A method comprising: receiving, by computing hardware, a use case and an identifier for an application programming interface ("API"); accessing, by the computing hardware and based at least in part on the identifier, data from a specification for the API, wherein the data comprises a set of parameters and a set of parameter dependencies; generating, by the computing hardware and based at least in part on the data, a graphical data structure comprising a set of vertices and a set of edges, wherein: each vertex of the set of vertices represents a parameter from the set of parameters, and each edge of the set of edges connects a first vertex and a second vertex from the set of vertices representing a parent parameter and a child parameter from the set of parameters in a direction representing a parent-child relationship between the parent parameter and the child parameter and defines a rule based at least in part on a parameter dependency from the set of parameter dependencies that exists between the parent parameter and the child parameter; performing, by the computing hardware, a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship; generating, by the computing hardware and based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing, by the computing hardware, the subset of parameters, the rule associated with each edge of the set of edges connected to the second vertex representing the child parameter from the subset of parameters, and the use case using a large language model to generate a response, wherein the response comprises a set of values for the subset of parameters; and parsing, by the computing hardware, the response to retrieve the set of values; and generating, by the computing hardware and based at least in part on the set of values for each execution level in the hierarchy of execution levels, an API request for the use case to submit to the API, wherein the API request comprises each parameter for the set of parameters initialized with a value from the set of values generated for the hierarchy of execution levels.

Embodiment 2: The method of embodiment 1,wherein the set of parameters comprises a set of container parameters and a set of container-related parameters, and the method further comprises: generating, by the computing hardware and based at least in part on the set of container parameters and the set of container-related parameters, a container-representative graphical data structure comprising a set of container-representative vertices and a set of container-representative edges, wherein: each container-representative vertex of the set of container-representative vertices represents at least one of a container parameter from the set of container parameters or a container-related parameter from the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters in a direction representing a parent-child container-representative relationship between the parent container-representative parameter and the child container-representative parameter and defines a container-representative rule based at least in part on a container-representative parameter dependency from the set of parameter dependencies that exists between the parent container-representative parameter and the child container-representative parameter; performing, by the computing hardware, a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship; generating, by the computing hardware and based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing, by the computing hardware, the subset of container-representative parameters, the rule associated with each container-representative edge of the set of container-representative edges connected to the second container-representative vertex representing the child container-representative parameter from the subset of container-representative parameters, and the use case using the large language model to generate a container-representative response, wherein the container-representative response comprises a set of container-representative values for the subset of container-representative parameters; and parsing, by the computing hardware, the container-representative response to retrieve the set of container-representative values; identifying, by the computing hardware and based at least in part on at least one ancestor/descendant dependency existing for a container parameter found in the set of container parameters, a required descendent parameter from at least one of the set of container parameters or the set of container-related parameters; and merging, by the computing hardware and based at least in part on the required descendent parameter, the set of container-representative values for each container-representative execution level in the hierarchy of container-representative execution levels into the set of values for each execution level in the hierarchy of execution levels to form the assembly of values.

Embodiment 3: The method of embodiment 1 or 2, wherein the graphical data structure comprises a key-value pair data structure that comprises a first set of first key-value pairs and a second set of second key-value pairs, each first key-value pair of the first set of first key-value pairs comprises a jsonPath as a first key and a parameter object as a first value, and each second key-value pair of the second set of second key-value pairs comprises a parent jsonPath as a second key and a list of edge objects as a second value.

Embodiment 4: The method of any of embodiments 1 to 3, wherein at least one value for the set of values for at least one parameter of the subset of parameters for at least one execution level of the hierarchy of execution levels comprises an assumption and the method further comprises causing, by the computing hardware, display of the API request along with identifying the assumption.

Embodiment 5: The method of embodiment 4, wherein the assumption comprises a default value provided in the specification for the API for the at least one parameter.

Embodiment 6: The method of embodiment 4, further comprising: receiving, by the computing hardware, a clarification value for the at least one value that comprises the assumption; and responsive to receiving the clarification value and for each execution level in the hierarchy of execution levels: processing, by the computing hardware, the subset of parameters, the rule associated with each edge of the set of edges connected to the second vertex representing the child parameter from the subset of parameters, and the use case using the large language model to generate an updated response, wherein the updated response comprises a set of updated values for the subset of parameters based at least in part on the clarification value; and parsing, by the computing hardware, the updated response to retrieve the set of updated values; and generating, by the computing hardware and based at least in part on the set of updated values for each execution level in the hierarchy of execution levels, the API request for the use case to submit to the API.

Embodiment 7: The method of any of embodiments 1 to 6, wherein processing the subset of parameters, the rule associated with each edge of the set of edges connected to the second vertex representing the child parameter from the subset of parameters, and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters, the rule associated with each edge of the set of edges connected to the second vertex representing the child parameter from the group of parameters, and the use case; and processing the input for each execution sublevel in the set of execution sublevels using the large language model to generate the response.

Embodiment 8: The method of embodiment 7, wherein the input for each execution sublevel in the set of execution sublevels comprises system instructions directing a behavior of the large language model, a prompt comprising the group of parameters, the rule associated with each edge of the set of edges connected to the second vertex representing the child parameter from the group of parameters, and the use case, and at least one of hyperparameters or a generation configuration for the large language model.

Embodiment 9:The method of embodiment 7, further comprising processing, via a prompt template, each parameter in the subset of parameters to generate the estimated prompt size.

Embodiment 10: A system comprising: a computer-readable medium storing instructions; and a processing device communicatively coupled to the computer-readable medium, wherein the processing device is configured to execute the instructions and thereby perform operations comprising: receiving a use case and an identifier for an application programming interface ("API"); accessing, based at least in part on the identifier, data from a specification for the API, wherein the data comprises a set of parameters and a set of parameter dependencies; generating, based at least in part on the data, a graphical data structure comprising a set of vertices and a set of edges, wherein: the set of vertices represents the set of parameters, and each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter; performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship; generating, based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing the subset of parameters, based at least in part on parameter dependencies from the set of parameter dependencies corresponding to the subset of parameters, and the use case using a large language model to generate a response, wherein the response comprises a set of values for the subset of parameters; and parsing the response to retrieve the set of values; and generating an API request for the use case to submit to the API, wherein the API request comprises each parameter for the set of parameters initialized with a value from the set of values generated for the hierarchy of execution levels.

Embodiment 11: The system of embodiment 10, wherein the set of parameters comprises a set of container parameters and a set of container-related parameters, and the operations further comprise: generating, based at least in part on the set of container parameters and the set of container-related parameters, a container-representative graphical data structure comprising a set of container-representative vertices and a set of container-representative edges, wherein: the set of container-representative vertices represents the set of container parameters and the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter; performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship; generating, based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing the subset of container-representative parameters, based at least in part on container-representative dependencies from the set of parameter dependencies corresponding to the subset of container-representative parameters, and the use case using the large language model to generate a container-representative response, wherein the container-representative response comprises a set of container-representative values for the subset of container-representative parameters; and parsing the container-representative response to retrieve the set of container-representative values; identifying, based at least in part on at least one ancestor/descendant dependency existing for a container parameter found in the set of container parameters, a required descendent parameter from at least one of the set of container parameters or the set of container-related parameters; and merging, based at least in part on the required descendent parameter, the set of container-representative values for each container-representative execution level in the hierarchy of container-representative execution levels into the set of values for each execution level in the hierarchy of execution levels to form the assembly of values.

Embodiment 12: The system of embodiment 10 or 11, wherein at least one value for the set of values for at least one parameter of the subset of parameters for at least one execution level of the hierarchy of execution levels comprises an assumption and the operations further comprise causing display of the API request along with identifying the assumption.

Embodiment 13: The system of embodiment 12, wherein the operations further comprise: receiving a clarification value for the at least one value that comprises the assumption; and responsive to receiving the clarification value and for each execution level of the hierarchy of execution levels: processing the subset of parameters, based at least in part on parameter dependencies from the set of parameter dependencies corresponding to the subset of parameters, and the use case using the large language model to generate an updated response, wherein the updated response comprises a set of updated values for the subset of parameters based at least in part on the clarification value; and parsing the updated response to retrieve the set of updated values; and generating, based at least in part on the set of updated values for each execution level in the hierarchy of execution levels, the API request for the use case to submit to the API.

Embodiment 14: The system of any of embodiments 10 to 13, wherein processing the subset of parameters, based at least in part on parameter dependencies from the set of parameter dependencies corresponding to the subset of parameters, and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters, based at least in part on parameter dependencies from the set of parameter dependencies corresponding to the group of parameters, and the use case; and processing the input for each execution sublevel in the set of execution sublevels using the large language model to generate the response.

Embodiment 15: A computer-readable medium storing computer-executable instructions that, when executed by computing hardware, configure the computing hardware to perform operations comprising: receiving a use case for an application programming interface ("API"); accessing data from a specification for the API, wherein the data comprises a set of parameters and a set of parameter dependencies; generating, based at least in part on the data, a graphical data structure comprising a set of vertices and a set of edges, wherein: the set of vertices represents the set of parameters, and each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter; performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering; generating, based at least in part on a path between a starting vertex of the set of vertices and an ending vertex of the set of vertices as shown in the topological sort, a hierarchy of execution levels, wherein each execution level of the hierarchy of execution levels comprises a subset of parameters from the set of parameters that can be initialized without any parameters from the set of parameters assigned to a subsequent execution level in the hierarchy of execution levels having to be initialized; for each execution level in the hierarchy of execution levels: processing the subset of parameters and the use case using a large language model to generate a response, wherein the response comprises a set of values for the subset of parameters; and parsing the response to retrieve the set of values; and generating an API request for the use case to submit to the API, wherein the API request comprises each parameter for the set of parameters initialized with a value from the set of values generated for the hierarchy of execution levels.

Embodiment 16: The computer-readable medium of embodiment 15, wherein the set of parameters comprises a set of container parameters and a set of container-related parameters, each container parameter found in the set of container parameters comprises a set of key/value pairs, and the operations further comprise: generating, based at least in part on the set of container parameters and the set of container-related parameters, a container-representative graphical data structure comprising a set of container-representative vertices and a set of container-representative edges, wherein: the set of container-representative vertices represents the set of container parameters and the set of container-related parameters, and each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter; generating a tree data structure that models the set of key/value pairs for each container parameter found in the set of container parameters to identify ancestor/descendant dependencies between key/value pairs found in the set of key/value pairs; performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering; generating, based at least in part on a container-representative path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized; for each container-representative execution level in the hierarchy of container-representative execution levels: processing the subset of container-representative parameters and the use case using the large language model to generate a container-representative response, wherein the container-representative response comprises a set of container-representative values for the subset of container-representative parameters; and parsing the container-representative response to retrieve the set of container-representative values; identifying, based at least in part on at least one ancestor/descendant dependency existing for a container parameter found in the set of container parameters, a required descendent parameter from at least one of the set of container parameters or the set of container-related parameters; and merging, based at least in part on the required descendent parameter, the set of container-representative values for each container-representative execution level in the hierarchy of container-representative execution levels into the set of values for each execution level in the hierarchy of execution levels to form the assembly of values.

Embodiment 17: The computer-readable medium of embodiment 15 or 16, wherein at least one value for the set of values for at least one parameter of the subset of parameters for at least one execution level of the hierarchy of execution levels comprises an assumption and the operations further comprise causing display of the API request along with identifying the assumption.

Embodiment 18: The computer-readable medium of embodiment 17, wherein the operations further comprise: receiving a clarification value for the at least one value that comprises the assumption; and responsive to receiving the clarification value and for each execution level in the hierarchy of execution levels: processing the subset of parameters and the use case using the large language model to generate an updated response, wherein the updated response comprises a set of updated values for the subset of parameters based at least in part on the clarification value; parsing the updated response to retrieve the set of updated values; and generating, based at least in part on the set of updated values for each execution level in the hierarchy of execution levels, the API request for the use case to submit to the API.

Embodiment 19: The computer-readable medium of any of embodiments 15 to 18, wherein processing the subset of parameters and the use case using the large language model for an execution level in the hierarchy of execution levels comprises: generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size; generating an input for each execution sublevel in the set of execution sublevels, wherein the input comprises the group of parameters and the use case; and processing the input for each execution sublevel in the set of execution sublevels using the large language model to generate the response.

Embodiment 20: The computer-readable medium of embodiment 19, wherein the input for each execution sublevel in the set of execution sublevels comprises system instructions directing a behavior of the large language model, a prompt comprising the group of parameters and the use case, and at least one of hyperparameters or a generation configuration for the large language model.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Similarly, while operations are described in a particular order, this should not be understood as requiring that such operations be performed in the particular order described or in sequential order, or that all described operations be performed, to achieve desirable results. In certain circumstances, multitasking and parallel processing may be advantageous. Moreover, the separation of various components in the various embodiments described above should not be understood as requiring such separation in all embodiments, and the described program components (e.g., modules) and systems may be integrated together in a single software product or packaged into multiple software products.

Many modifications and other embodiments of the disclosure will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for the purposes of limitation.

In some embodiments, this disclosure may include the language "at least one of [element A] or [element B]." This language may refer to one or more of the elements. For example, "at least one of A or B" may refer to "A," "B," or "A and B." In other words, "at least one of A or B" may refer to "at least one of A and at least one of B," "at least A or B," or "A and B." In some embodiments, this disclosure may include the language, for example "[element A], [element B], and/or [element C]." This language may refer to either of the element or any combination thereof. In other words, "A, B, and/or C" may refer to "A," "B," "C," "A and B," "A and C," "B and C," or "A, B, and C."

The subject matter of this disclosure has been described in relation to particular embodiments, which are intended in all respects to be illustrative rather than restrictive. Alternative embodiments will become apparent to those of ordinary skill in the art to which the present subject matter pertains without departing from the scope hereof. Different combinations of elements, as well as use of elements not shown, are also possible and contemplated.

## Claims

1. A method comprising:
receiving, by computing hardware, a use case and an identifier for an application programming interface ("API");
accessing, by the computing hardware and based at least in part on the identifier, data from a specification for the API, wherein the data comprises a set of parameters and a set of parameter dependencies;
generating, by the computing hardware and based at least in part on the data, a graphical data structure comprising a set of vertices and a set of edges, wherein:
each vertex of the set of vertices represents a parameter from the set of parameters, and
each edge of the set of edges connects a first vertex and a second vertex from the set of vertices representing a parent parameter and a child parameter from the set of parameters in a direction representing a parent-child relationship between the parent parameter and the child parameter and defines a rule based at least in part on a parameter dependency from the set of parameter dependencies that exists between the parent parameter and the child parameter;
performing, by the computing hardware, a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship;
generating, by the computing hardware and based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized;
for each execution level in the hierarchy of execution levels:
processing, by the computing hardware, the subset of parameters, the rule associated with each edge of the set of edges connected to the second vertex representing the child parameter from the subset of parameters, and the use case using a large language model to generate a response, wherein the response comprises a set of values for the subset of parameters; and
parsing, by the computing hardware, the response to retrieve the set of values; and
generating, by the computing hardware and based at least in part on an assembly of values formed from the set of values for each execution level in the hierarchy of execution levels, an API request for the use case to submit to the API, wherein the API request comprises each parameter for the set of parameters initialized with a value from the assembly of values.

2. The method of claim 1, wherein the set of parameters comprises a set of container parameters and a set of container-related parameters, and the method further comprises:
generating, by the computing hardware and based at least in part on the set of container parameters and the set of container-related parameters, a container-representative graphical data structure comprising a set of container-representative vertices and a set of container-representative edges, wherein:
each container-representative vertex of the set of container-representative vertices represents at least one of a container parameter from the set of container parameters or a container-related parameter from the set of container-related parameters, and
each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters in a direction representing a parent-child container-representative relationship between the parent container-representative parameter and the child container-representative parameter and defines a container-representative rule based at least in part on a container-representative parameter dependency from the set of parameter dependencies that exists between the parent container-representative parameter and the child container-representative parameter;
performing, by the computing hardware, a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship;
generating, by the computing hardware and based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or container-related parameters from the set of container parameters and the set of container-related parameters assigned to a subsequent container-representative execution level in the hierarchy of container-representative execution levels having to be initialized;
for each container-representative execution level in the hierarchy of container-representative execution levels:
processing, by the computing hardware, the subset of container-representative parameters, the rule associated with each container-representative edge of the set of container-representative edges connected to the second container-representative vertex representing the child container-representative parameter from the subset of container-representative parameters, and the use case using the large language model to generate a container-representative response, wherein the container-representative response comprises a set of container-representative values for the subset of container-representative parameters; and
parsing, by the computing hardware, the container-representative response to retrieve the set of container-representative values;
identifying, by the computing hardware and based at least in part on at least one ancestor/descendant dependency existing for a container parameter found in the set of container parameters, a required descendent parameter from at least one of the set of container parameters or the set of container-related parameters; and
merging, by the computing hardware and based at least in part on the required descendent parameter, the set of container-representative values for each container-representative execution level in the hierarchy of container-representative execution levels into the set of values for each execution level in the hierarchy of execution levels to form the assembly of values.

3. The method of claim 1 or 2, wherein the graphical data structure comprises a key-value pair data structure that comprises a first set of first key-value pairs and a second set of second key-value pairs, each first key-value pair of the first set of first key-value pairs comprises a jsonPath as a first key and a parameter object as a first value, and each second key-value pair of the second set of second key-value pairs comprises a parent jsonPath as a second key and a list of edge objects as a second value.

4. The method of any of claims 1 to 3, wherein at least one value for the set of values for at least one parameter of the subset of parameters for at least one execution level of the hierarchy of execution levels comprises an assumption and the method further comprises causing, by the computing hardware, display of the API request along with identifying the assumption.

5. The method of claim 4, further comprising:
receiving, by the computing hardware, a clarification value for the at least one value that comprises the assumption; and
responsive to receiving the clarification value and for each execution level in the hierarchy of execution levels:
processing, by the computing hardware, the subset of parameters, the rule associated with each edge of the set of edges connected to the second vertex representing the child parameter from the subset of parameters, and the use case using the large language model to generate an updated response, wherein the updated response comprises a set of updated values for the subset of parameters based at least in part on the clarification value; and
parsing, by the computing hardware, the updated response to retrieve the set of updated values; and
generating, by the computing hardware and based at least in part on the set of updated values for each execution level in the hierarchy of execution levels, the API request for the use case to submit to the API.

6. The method of any of claims 1 to 5, wherein processing the subset of parameters, the rule associated with each edge of the set of edges connected to the second vertex representing the child parameter from the subset of parameters, and the use case using the large language model for an execution level in the hierarchy of execution levels comprises:
generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size;
generating an input for each execution sublevel in the set of execution sublevels, wherein the input comprises the group of parameters, the rule associated with each edge of the set of edges connected to the second vertex representing the child parameter from the group of parameters, and the use case; and
processing the input for each execution sublevel in the set of execution sublevels using the large language model to generate the response.

7. A system comprising:
a computer-readable medium storing instructions; and
a processing device communicatively coupled to the computer-readable medium, wherein the processing device is configured to execute the instructions and thereby perform operations comprising:
receiving a use case and an identifier for an application programming interface ("API");
accessing, based at least in part on the identifier, data from a specification for the API, wherein the data comprises a set of parameters and a set of parameter dependencies;
generating, based at least in part on the data, a graphical data structure comprising a set of vertices and a set of edges, wherein:
the set of vertices represents the set of parameters, and
each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter;
performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering based at least in part on the parent-child relationship;
generating, based at least in part on a longest path between a starting vertex of the set of vertices and an ending vertex of the set of vertices as shown in the topological sort, a hierarchy of execution levels, wherein each execution level in the hierarchy of execution levels comprises a subset of parameters from the set of parameters that can be initialized without any parameters from the set of parameters assigned to a subsequent execution level in the hierarchy of execution levels having to be initialized;
for each execution level in the hierarchy of execution levels:
processing the subset of parameters, based at least in part on parameter dependencies from the set of parameter dependencies corresponding to the subset of parameters, and the use case using a large language model to generate a response, wherein the response comprises a set of values for the subset of parameters; and
parsing the response to retrieve the set of values; and
generating an API request for the use case to submit to the API, wherein the API request comprises each parameter for the set of parameters initialized with a value from an assembly of values formed from the set of values generated for the hierarchy of execution levels.

8. The system of claim 7, wherein the set of parameters comprises a set of container parameters and a set of container-related parameters, and the operations further comprise:
generating, based at least in part on the set of container parameters and the set of container-related parameters, a container-representative graphical data structure comprising a set of container-representative vertices and a set of container-representative edges, wherein:
the set of container-representative vertices represents the set of container parameters and the set of container-related parameters, and
each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter;
performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering based at least in part on the parent-child container-representative relationship;
generating, based at least in part on a container-representative longest path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized;
for each container-representative execution level in the hierarchy of container-representative execution levels:
processing the subset of container-representative parameters, based at least in part on container-representative dependencies from the set of parameter dependencies corresponding to the subset of container-representative parameters, and the use case using the large language model to generate a container-representative response, wherein the container-representative response comprises a set of container-representative values for the subset of container-representative parameters; and
parsing the container-representative response to retrieve the set of container-representative values;
identifying, based at least in part on at least one ancestor/descendant dependency existing for a container parameter found in the set of container parameters, a required descendent parameter from at least one of the set of container parameters or the set of container-related parameters; and
merging, based at least in part on the required descendent parameter, the set of container-representative values for each container-representative execution level in the hierarchy of container-representative execution levels into the set of values for each execution level in the hierarchy of execution levels to form the assembly of values.

9. The system of claim 7 or 8, wherein processing the subset of parameters, based at least in part on parameter dependencies from the set of parameter dependencies corresponding to the subset of parameters, and the use case using the large language model for an execution level in the hierarchy of execution levels comprises:
generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size;
generating an input for each execution sublevel in the set of execution sublevels, wherein the input comprises the group of parameters, based at least in part on parameter dependencies from the set of parameter dependencies corresponding to the group of parameters, and the use case; and
processing the input for each execution sublevel in the set of execution sublevels using the large language model to generate the response.

10. A computer-readable medium storing computer-executable instructions that, when executed by computing hardware, configure the computing hardware to perform operations comprising:
receiving a use case for an application programming interface ("API");
accessing data from a specification for the API, wherein the data comprises a set of parameters and a set of parameter dependencies;
generating, based at least in part on the data, a graphical data structure comprising a set of vertices and a set of edges, wherein:
the set of vertices represents the set of parameters, and
each edge of the set of edges connects a first vertex and a second vertex from the set of vertices representing a parent parameter and a child parameter from the set of parameters having a parent-child relationship and defines a rule based at least in part on a parameter dependency from the set of parameter dependencies that exists between the parent parameter and the child parameter;
performing a topological sort on the graphical data structure to generate a linear ordering of the set of vertices such that for every edge of the set of edges connecting the first vertex and the second vertex, the first vertex representing the parent parameter comes before the second vertex representing the child parameter in the linear ordering;
generating, based at least in part on a path between a starting vertex of the set of vertices and an ending vertex of the set of vertices as shown in the topological sort, a hierarchy of execution levels, wherein each execution level of the hierarchy of execution levels comprises a subset of parameters from the set of parameters that can be initialized without any parameters from the set of parameters assigned to a subsequent execution level in the hierarchy of execution levels having to be initialized;
for each execution level in the hierarchy of execution levels:
processing the subset of parameters and the use case using a large language model to generate a response, wherein the response comprises a set of values for the subset of parameters; and
parsing the response to retrieve the set of values; and
generating an API request for the use case to submit to the API, wherein the API request comprises each parameter for the set of parameters initialized with a value from an assembly of values formed from the set of values generated for the hierarchy of execution levels.

11. The computer-readable medium of claim 10, wherein the set of parameters comprises a set of container parameters and a set of container-related parameters, each container parameter found in the set of container parameters comprises a set of key/value pairs, and the operations further comprise:
generating, based at least in part on the set of container parameters and the set of container-related parameters, a container-representative graphical data structure comprising a set of container-representative vertices and a set of container-representative edges, wherein:
the set of container-representative vertices represents the set of container parameters and the set of container-related parameters, and
each container-representative edge of the set of container-representative edges connects a first container-representative vertex and a second container-representative vertex from the set of container-representative vertices representing a parent container-representative parameter and a child container-representative parameter from at least one of the set of container parameters or the set of container-related parameters having a parent-child container-representative relationship and defines a container-representative rule based at least in part on a container-representative parameter dependency from the set of parameter dependencies that exists between the parent container-representative parameter and the child container-representative parameter;
generating a tree data structure that models the set of key/value pairs for each container parameter found in the set of container parameters to identify ancestor/descendant dependencies between key/value pairs found in the set of key/value pairs;
performing a container-representative topological sort on the container-representative graphical data structure to generate a container-representative linear ordering of the set of container-representative vertices such that for every container-representative edge of the set of container-representative edges connecting the first container-representative vertex and the second container-representative vertex, the first container-representative vertex representing the parent container-representative parameter comes before the second container-representative vertex representing the child container-representative parameter in the container-representative linear ordering;
generating, based at least in part on a container-representative path between a starting container-representative vertex of the set of container-representative vertices and an ending container-representative vertex of the set of container-representative vertices as shown in the topological sort, a hierarchy of container-representative execution levels, wherein each container-representative execution level in the hierarchy of container-representative execution levels comprises a subset of container-representative parameters from at least one of the set of container parameters or the set of container-related parameters that can be initialized without any containers parameters or any container-related parameters from the set of container parameters and the set of container-related parameters assigned to a subsequent container-representative execution level in the hierarchy of container-representative execution levels having to be initialized;
for each container-representative execution level in the hierarchy of container-representative execution levels:
processing the subset of container-representative parameters and the use case using the large language model to generate a container-representative response, wherein the container-representative response comprises a set of container-representative values for the subset of container-representative parameters; and
parsing the container-representative response to retrieve the set of container-representative values;
identifying, based at least in part on at least one ancestor/descendant dependency existing for a container parameter found in the set of container parameters, a required descendent parameter from at least one of the set of container parameters or the set of container-related parameters; and
merging, based at least in part on the required descendent parameter, the set of container-representative values for each container-representative execution level in the hierarchy of container-representative execution levels into the set of values for each execution level in the hierarchy of execution levels to form the assembly of values.

12. The computer-readable medium of claim 10 or 11, wherein at least one value for the set of values for at least one parameter of the subset of parameters for at least one execution level of the hierarchy of execution levels comprises an assumption and the operations further comprise causing display of the API request along with identifying the assumption.

13. The computer-readable medium of claim 12, wherein the operations further comprise:
receiving a clarification value for the at least one value that comprises the assumption; and
responsive to receiving the clarification value and for each execution level in the hierarchy of execution levels:
processing the subset of parameters and the use case using the large language model to generate an updated response, wherein the updated response comprises a set of updated values for the subset of parameters based at least in part on the clarification value;
parsing the updated response to retrieve the set of updated values; and
generating, based at least in part on the set of updated values for each execution level in the hierarchy of execution levels, the API request for the use case to submit to the API.

14. The computer-readable medium of any of claims 10 to 13, wherein processing the subset of parameters and the use case using the large language model for an execution level in the hierarchy of execution levels comprises:
generating, based at least in part on an estimated prompt size for each parameter in the subset of parameters, a set of execution sublevels, wherein each execution sublevel of the set of execution sublevels comprises a group of parameters from the subset of parameters having a sum of the estimated prompt size for each parameter in the group of parameters satisfying a threshold size;
generating an input for each execution sublevel in the set of execution sublevels, wherein the input comprises the group of parameters and the use case; and
processing the input for each execution sublevel in the set of execution sublevels using the large language model to generate the response.

15. The computer-readable medium of claim 14, wherein the input for each execution sublevel in the set of execution sublevels comprises system instructions directing a behavior of the large language model, a prompt comprising the group of parameters and the use case, and at least one of hyperparameters or a generation configuration for the large language model.
